# FASCICULE DE BREVET EUROPEEN

(11) **EP 0 478 444 B1**
(45) Date de publication et mention de la délivrance du brevet: **06.04.1994**
(21) Numéro de dépôt: 91402543.2
(22) Date de dépôt: 24.09.1991
(51) Int. Cl.: B64C 27/51

(54) **Tête de rotor pour giravion**
Rotorkopf eines Drehflügelflugzeuges
Rororcraft rotor head

(30) Priorité: 27.09.1990 FR 9011950
(43) Date de publication de la demande: 01.04.1992
(73) Titulaire: AEROSPATIALE Société Nationale Industrielle, 75781 Paris Cédex 16 (FR)
(72) Inventeur: Aubry, Jacques Antoine, F-13480 Cabries (FR)
(74) Mandataire: Phélip, Bruno

(56) Documents cités:
- FR-A- 2 427 251
- FR-A- 2 592 449
- GB-A- 643 875
- US-A- 2 516 781

## Description

La présente invention est relative à une tête de rotor pour giravion, et plus particulièrement à une tête de rotor pour giravion comportant un moyeu auquel chaque pale de rotor est accouplée par l'intermédiaire de moyens d'articulation autorisant les oscillations angulaires de battement et l'orientation en pas de ladite pale, ainsi que notamment les mouvements de pivotement en traînée de ladite pale autour d'un centre commun fixe par rapport au corps du moyeu, chaque pale étant également associée à au moins un dispositif d'amortissement desdits mouvements de trainée, qui est monté sur la tête de rotor.

Des têtes de rotor de ce type sont déjà connues et ont été notamment décrites dans le brevet FR 2.427.251 de la demanderesse. Ce document fait en effet état de rotor pour giravion comportant chacun un moyeu auquel les pales du rotor sont articulées par l'intermédiaire chacune d'une butée lamifiée sphérique qui sert simultanément de moyens de retenue à l'encontre des forces centrifuges et d'articulation en pas, trainée et battement. Une telle butée lamifiée sphérique y est montée sur un plateau, qui constitue le corps du moyeu à la partie supérieure du mât rotor et qui est traversé, dans son épaisseur, sensiblement parallèlement à l'axe de rotation du mât rotor, par des alvéoles ménagées régulièrement sur sa périphérie, chaque alvéole de ce type portant, par son bord le plus éloigné de l'axe du rotor du giravion, une butée lamifiée sphérique qui sert de moyens de retenue et d'articulation d'une pale du rotor. Les bords excentrés de ces alvéoles supportent donc des armatures radiales externes par rapport à l'axe de rotation du rotor de ces butées lamifiées sphériques, dont des armatures internes sont réalisées par des pièces formant entretoises montées entre les deux branches de pièces d'attache fourchues portant à leur autre extrémité le pied de la pale correspondante, les deux branches de chaque pièce d'attache étant disposées de part et d'autre du plan médian de la pale associée à ladite pièce d'attache.

Il a encore été présenté dans le certificat d'addition PR-2.456.034 au brevet ci-dessus mentionné des têtes de rotor dont le moyeu est muni de deux plateaux disposés l'un au dessus de l'autre en prolongement d'un fût central. Entre ces deux plateaux est montée pour chaque pale, une entretoise servant d'armature externe pour une butée lamifiée sphérique associée à ladite pale, cette pale étant reliée à l'armature interne de ladite butée lamifiée sphérique par l'intermédiaire d'une pièce d'attache évidée pour le libre passage de ladite butée sphérique, ladite pièce se terminant à cet effet du côté du moyeu par deux branches s'étendant latéralement de part et d'autre de ladite butée sphérique et se rejoignant au niveau de ladite armature interne.

Chacune des pales des têtes de rotor décrites dans ces deux documents est associée à une contre-fiche de rappel élastique à amortissement incorporé de ladite pale en traînée. Une telle contre-fiche est du type linéaire à amortissement visco- et/ou hydro-élastique et est articulée latéralement par rapport à la pale entre ladite pale et ledit moyeu.

D'autres têtes de rotor de ce type ont encore été décrites dans les brevets FR-2.584.995 et FR-2.584.996 de la demanderesse. Le moyeu et le mât-rotor de ces têtes de rotor forment une même pièce dont le corps tubulaire est traversé par l'une au moins des branches de chaque pièce d'attache fourchue porteuse de pale, au niveau d'ouvertures ménagées régulièrement sur une périphérie dudit corps tubulaire et dont le contour autorise les mouvements de pas, traînée et battement de la pièce d'attache qui leur est associée. Chaque portion du corps tubulaire, entre les deux ouvertures associées aux deux branches d'une même pièce d'attache dans les réalisations de FR-2.584.995, ou entre l'ouverture associée à l'une des branches de ladite pièce d'attache fourchue et le rebord du corps tubulaire dans FR-2.584.996, porte à ou vers l'intérieur dudit corps tubulaire, l'armature externe de la butée lamifiée sphérique associée à ladite pièce d'attache.

Chaque pale y est également associée à un dispositif destiné à amortir ses mouvements de traînée, qui est du type contre-fiche linéaire de rappel élastique à amortissement hydro- et/ou visco-élastique articulé d'une part sur le moyeu et d'autre part sur ladite pièce d'attache dans sa partie située à l'intérieur du corps tubulaire.

De tels dispositifs linéaires d'amortissement présentent structurellement quelques inconvénients. En particulier, ils s'avèrent, du fait de leur encombrement, d'une adaptation difficile sur des rotors à grand nombre de pales (4 à 5 pales et plus). Sur de tels rotors, en effet, ces amortisseurs linéaires ne pourraient être disposés que sensiblement le long de la pièce d'attache, quasi parallèlement à l'axe radial de ladite pièce correspondant à l'axe longitudinal de ladite pièce. Or, dans une telle structure de montage, les contre-fiches d'amortissement et de rappel élastique ne seraient sollicitées en traînée qu'avec un très faible bras de levier par rapport au centre d'articulation de la pale. L'amortissement et le rappel élastique réalisés par ces contre-fiches seraient donc en général peu satisfaisants, sauf à augmenter leur raideur de rappel, ce qui conduit à des contre-fiches d'une structure complexe et d'un encombrement prohibitif.

Comme il n'est pas possible d'incliner suffisamment l'axe de l'amortisseur sur l'axe de la pale pour que le centre d'articulation de l'amortisseur sur le moyeu soit situé sur l'axe passant à la fois par le centre de battement de la pale et par le centre d'articulation de la bielle de commande de pas sur le levier de pas de la pale correspondante, il en résulte des couplages indésirables.

Un but de l'invention est donc de pallier ces différents inconvénients. Elle propose notamment, pour ce faire, d'incorporer un amortisseur de traînée de type rotatif à la pièce d'attache de chaque pale. Un tel amortisseur rotatif peut être notamment du type à amortissement hydro-élastique décrit dans la demande de brevet FR-2.592.449 de la demanderesse et comprenant un agencement co-axial d'un rotor et d'un stator munis de palettes alternativement solidaires du rotor et du stator. Ces palettes délimitent, à l'intérieur de l'amortisseur, avec des couvercles fermant ledit amortisseur transversalement à l'axe du rotor et du stator, plusieurs compartiments dans une chambre principale remplie de fluide visqueux et sont munies d'orifices de laminage du fluide, lequel passe d'un compartiment à l'autre de la chambre principale lors d'un mouvement relatif des organes rotor et stator. D'autres amortisseurs rotatifs peuvent être encore envisagés, et notamment des amortisseurs rotatifs à amortissement visco-élastique.

Il a déjà été proposé par la demanderesse, à cet égard, dans son brevet FR 2.458.457, d'intégrer à chaque pièce d'attache d'une pale au moyeu d'un rotor d'hélicoptère, un amortisseur visco-élastique constitué par des couches stratifiées d'élastomère montées entre une armature externe, qui est un étrier, solidaire du moyeu quant à ses mouvements de rotation autour de l'axe du rotor, et des armatures internes, qui sont constituées par des flasques métalliques fixés à la pièce d'attache, ladite pièce d'attache étant elle-même articulée par l'intermédiaire d'une butée lamifiée sphérique sur le corps du moyeu. Les mouvements angulaires de traînée de chaque pale sont donc entravés par le susdit étrier et leurs oscillations sont filtrées par l'amortisseur stratifié monté sur celui-ci, les couches d'élastomère se déformant en cisaillement et provoquant un rappel élastique de la pale tout en assurant simultanément un amortissement des mouvements d'oscillation correspondants. L'ensemble constitué par l'étrier qui sert d'armature externe, les couches d'élastomères stratifiées et les flasques de la pièce d'attache servant d'armature interne constituent par conséquent un amortisseur du type rotatif dont l'axe de pivotement passe par le centre de la butée lamifiée sphérique et est sensiblement perpendiculaire au plan médian et des flasques et des étriers.

Cependant, une telle structure d'amortisseur présente l'inconvénient de solliciter fortement en cisaillement la partie de la pièce d'attache qui sert d'armature à l'amortisseur, cette partie subissant, outre des contraintes en tant qu'armature, les efforts qu'exerce sur la pièce d'attache la pale montée solidairement à son extrémité. Il devient donc nécessaire de vérifier et remplacer régulièrement les pièces d'attache des pales. D'autres inconvénients majeurs de cette structure tiennent encore, d'une part, en ce que les pièces qui la composent sont d'un coutour annulaire compliqué et donc d'une réalisation difficile et, d'autre part, en ce que son montage est rendu relativement complexe du fait de l'encombrement de ces différentes pièces autour de la butée lamifiée sphérique.

Un autre but de l'invention est donc de pallier également ces inconvénients. Elle propose pour cela d'intégrer à une pièce d'attache un ensemble amortisseur du type rotatif dont les éléments ne sont pas des éléments constitutifs de ladite pièce d'attache. En outre, l'invention permet également d'éviter les couplages entre les mouvements de traînée, pas et battement rencontrés avec les amortisseurs linéaires sur des rotors à grand nombre de pales.

En particulier, l'invention propose des structures de tête de rotor dans lesquelles les mouvements de traînée des pales, en oscillation autour du centre des butées lamifiées sphériques, auxquelles elles sont associées, sont amortis par l'intermédiaire de dispositifs d'amortissement du type rotatif, dont les mouvements relatifs des organes qui les composent sont des rotations autour d'un axe de pivotement ne passant pas par ledit centre de la butée lamifiée sphérique,les structures de tête de rotor proposées rendant compatibles les différents mouvements de pas, trainée et battement des pales avec un tel amortissement.

La présente invention a donc pour objet une tête de rotor pour giravion, comportant un moyeu auquel chaque pale de rotor est accouplée,éventuellement par l'intermédiaire d'une pièce d'attache, par des moyens d'articulation du type à butée lamifiée sphérique autorisant les oscillations angulaires de battement et l'orientation en pas de ladite pale ainsi que notamment ses mouvements angulaires alternés de trainée autour d'un centre commun tournant avec les pales du rotor autour de l'axe dudit rotor et fixe par rapport au corps du moyeu, ladite pale étant également associée à un dispositif d'amortissement desdits mouvements de trainée monté entre ladite pale et ledit moyeu et du type comportant deux organes aptes à pivoter relativement autour d'un axe commun, les mouvements relatifs desdits organes étant amortis hydro- et/ou viscoélastiquement, caractérisée en ce que l'un desdits organes est monté sur l'un des deux éléments que constituent d'une part ladite pale ou sa pièce d'attache et d'autre part ledit moyeu pour l'accompagner, dans le cas de la pale ou de sa pièce d'attache,dans ses mouvements éventuels de trainée, l'autre desdits organes étant articulé par rapport à un point d'articulation sur l'autre desdits éléments pour garder en trainée une orientation angulaire constante par rapport à la droite reliant ledit point d'articulation à l'axe de pivotement relatif desdits organes, l'un au moins desdits organes étant apte à se translater par rapport à l'élément sur lequel il est articulé de façon à permettre l'adaptation de la distance séparant l'axe de pivotement et le centre de trainée et/ou de la distance séparant l'axe de pivotement et le point d'articulation à la position de trainée de la pale, l'un des organes du dispositif d'amortissement associé à ladite pale étant monté sur le moyeu et articulé en pivotement par rapport à au moins un axe de celui-ci, l'autre desdits organes étant monté ou articulé sur ladite pale ou sa pièce d'attache et entraînant le premier desdits organes en battement autour dudit axe lors desdits mouvements de battements de ladite pale. La chaîne cinématique, qui relie les organes du dispositif d'amortissement, d'une part au moyeu et d'autre part à la pale ou sa pièce d'attache, peut comporter au moins une liaison à rotule et une liaison à pivot autour d'un axe non parallèle à l'axe de pivotement relatif desdits organes. L'un des organes d'un dispositif d'amortissement peut être relié à l'un des éléments de l'ensemble constitué par le moyeu et une pale ou sa pièce d'attache par l'intermédiaire d'une pièce de liaison articulée sur ledit organe ou ledit élément par l'intermédiaire d'une liaison à rotule. La pièce de liaison peut être apte à se translater par rapport au centre de la liaison à rotule. La pièce de liaison peut être munie d'une tige d'extrémité montée dans un alésage complémentaire traversant une rotule apte à pivoter autour de son centre fixe par rapport à l'élément ou l'organe sur lequel ladite rotule est montée, ladite tige étant apte à coulisser dans son alésage complémentaire. Le centre de la liaison à rotule peut être fixe par rapport à la pale ou sa pièce d'attache. Une pale et sa pièce d'attache peuvent être deux pièces distinctes, ladite pale étant solidarisée à ladite pièce d'attache par emboîtement de son pied dans une chape d'extrémité dont est munie ladite pièce d'attache, le fond de ladite chape recevant la rotule sur laquelle est articulée la pièce de liaison, ladite rotule étant apte à pivoter autour de son centre sensiblement fixe par rapport audit fond.

Selon un mode de réalisation préférentiel, l'un des organes du dispositif d'amortissement est articulé par une liaison à rotule sur l'élément sur lequel il est monté, l'autre desdits organes étant articulé sur l'élément sur lequel il est monté, par l'intermédiaire d'une liaison de pivotement autour d'un axe fixe par rapport audit élément. L'axe de ladite liaison de pivotement peut être perpendiculaire à l'axe de pivotement relatif desdits organes. L'un des organes du dispositif d'amortissement est articulé par une liaison pivot sur le corps de moyeu, l'autre desdits organes étant articulé par une liaison à rotule sur la pale ou la pièce d'attache associée à ladite pale.

Selon un autre mode de réalisation préférentiel, l'un des organes d'un dispositif d'amortissement est fixe par rapport à l'un des éléments de l'ensemble que constituent le moyeu et la pale ou sa pièce d'attache, l'autre desdits organes étant articulé sur l'autre desdits éléments par l'intermédiaire d'au moins une liaison à rotule. L'articulation du second desdits organes sur le second desdits éléments est, par exemple, réalisée par l'intermédiaire d'une pièce de liaison articulée sur l'un dudit organe et dudit élément par l'intermédiaire d'une liaison à rotule et sur l'autre par l'intermédiaire d'une liaison à pivot. Ladite pièce de liaison peut être un étrier articulé d'une part par ses branches en pivotement autour d'un axe fixe par rapport à l'un des organes du dispositif d'amortissement et d'autre part sur le moyeu par l'intermédiaire d'une liaison à rotule. L'étrier peut être muni, sensiblement sur sa partie centrale, d'une tige emboîtée dans un alésage complémentaire dont est muni une rotule apte à pivoter autour de son centre fixe par rapport au moyeu, ladite tige étant apte à coulisser dans ledit alésage. L'étrier peut être associé à des moyens permettant un léger déboîtement de ses branches par rapport à leur axe de pivotement sur celui des organes du dispositif d'amortissement sur lequel elles sont articulées, pour accompagner les mouvements de pas de la pale et éventuellement de sa pièce d'attache. Lesdits moyens comprennent, par exemple, des liaisons rotulaires entre les branches dudit étrier et l'axe de ladite liaison pivot.

Avantageusement encore, chaque pale est accouplée au moyeu par l'intermédiaire d'une pièce d'attache à extrémité fourchue, les moyens d'articulation de ladite pale sur ledit moyeu étant réalisés par une unique butée lamifiée sphérique montée entre une armature radiale externe solidaire du moyeu et une armature radiale interne disposée en entretoise entre les branches d'extrémité radiale interne de ladite pièce d'attache. L'armature externe peut être montée sur une ceinture de renforcement entourant le corps du moyeu. La ceinture peut avoir une section droite en forme de U, dont les branches s'étendent au fond de ladite ceinture sensiblement radialement vers l'extérieur du corps du moyeu. Une ceinture renforcée peut avoir un contour polygonal à sommets arrondis et à petits côtés égaux alternant avec des grands côtés égaux, les petits côtés portant les armatures externes des butées lamifiées associées aux pales. L'armature externe également de section droite sensiblement en forme de U avec des branches dirigées radialement vers l'extérieur peut être encastrée sur un petit côté de la ceinture et être associée à un capot solidarisé aux branches de ladite armature externe et obturant la partie ouverte de ladite armature externe et dudit petit côté de section droite en forme de U de la ceinture. Un capot peut porter, par l'intermédiaire de deux oreilles dont il est muni, un arbre sur lequel est articulé en pivotement autour de l'axe dudit arbre, l'un des organes du dispositif d'amortissement. Le capot peut également être muni d'un évidement recevant une rotule apte à pivoter à l'intérieur dudit évidement autour de son centre fixe par rapport au capot.

De façon préférentielle encore, le dispositif d'amortissement associé à une pale est monté à l'intérieur de la pièce d'attache de ladite pale. L'un des organes du dispositif d'amortissement peut être un organe stator dont les parois intérieures délimitent une enveloppe à forme principale de révolution, l'autre desdits organes étant un organe rotor apte à pivoter coaxialement dans ladite enveloppe. L'organe stator peut être articulé ou monté sur le moyeu, l'organe rotor étant articulé ou monté sur la pale ou sa pièce d'attache. Les mouvements de pivotement relatif des organes stator et rotor sont avantageusement amortis hydroélastiquement, l'enveloppe de l'organe stator et les parois de l'organe rotor en regard de ladite enveloppe délimitant ensemble, avec des faces extrêmes entre lesquelles ladite enveloppe et lesdites parois sont montées, une chambre principale remplie de fluide, ladite enveloppe et lesdites parois en regard étant munies de palettes divisant ladite chambre principale en une pluralité de volumes, lesdites palettes étant associées à des moyens de laminage dudit fluide à travers les différents volumes de ladite chambre principale, ladite chambre principale étant en communication avec au moins une chambre auxiliaire à volume variable destinée notamment à compenser les dilatations du fluide. Les moyens de laminage comprennent par exemple au moins un orifice de laminage traversant une palette dans son épaisseur, ladite palette étant comprise entre deux palettes sans orifice associées à celui des deux organes rotor et stator qui ne porte pas ladite première palette. Un orifice de laminage peut être associé à une lamelle ressort qui l'obture dans sa position de repos et autorise le passage du fluide dans ledit orifice au-dessus d'un seuil prédéterminé de pression différencielle entre les deux compartiments que ladite palette délimite dans la chambre principale. Une palette peut être traversée par deux orifices dont les axes sont répartis sensiblement sur une de ses hauteurs, chacune des palettes associées à l'organe rotor est traversée par au moins un orifice de laminage permettant la communication entre les deux compartiments qu'elle délimite dans la chambre principale. Les faces extrêmes délimitant la chambre principale et entre lesquelles l'enveloppe de l'organe stator et les parois de l'organe rotor en regard sont montées, peuvent être les faces de couronnes annulaires solidarisées des parois délimitant ladite enveloppe, les palettes de l'organe rotor se déplaçant entre lesdites couronnes. La communication entre une chambre auxiliaire et la chambre principale peut être obtenue par circulation du fluide entre le bord annulaire intérieur d'au moins l'une desdites couronnes et la portion de paroi externe de l'organe rotor qui lui fait face.

La chambre auxiliaire est, dans une réalisation préférentielle, disposée à l'intérieur de l'organe rotor. La chambre auxiliaire est par exemple délimitée en partie par une membrane à déroulement montée sur un piston repoussé par un ressort en compression pour adapter le volume de ladite chambre auxiliaire aux variations éventuelles des volumes de fluide et maintenir l'amortisseur rotatif hydraulique sous une pression suffisante en charge statique. Une membrane à déroulement peut être montée dans un évidement coaxial aux organes stator et rotor, obturé de manière étanche à l'une des ses extrémités et dans l'autre extrémité duquel est monté coaxialement ledit piston. Une palette peut être constituée par deux ailettes côte-à-côte, chacune traversée par deux orifices de laminage, les orifices des ailettes d'une même palette étant regard les uns des autres, l'un des orifices d'une ailette étant associé à une lamelle ressort, et étant en regard d'un orifice non obturé de manière sélective par une lamelle ressort. Les palettes de l'organe rotor comportent par exemple chacune deux ailettes côte-à-côte.

Les lamelles ressort associées à une même palette peuvent être disposées à l'intérieur de l'évide ment délimité par les deux ailettes réalisant ladite palette, en étant décalées en hauteur les unes par rapport aux autres.

Dans un autre mode de réalisation avantageux, la chambre auxiliaire est délimitée au moins partiellement par les surfaces extérieures des couronnes délimitant les faces extrêmes de la chambre principale et au moins partiellement par une membrane élastiquement déformable. Chaque couronne annulaire peut être associée à une membrane élastiquement déformable, le dispositif d'amortissement étant muni d'une chambre auxiliaire vers chacune de ses extrémités dans la hauteur des organes stator et rotor. Une membrane élastiquement déformable a une forme annulaire. Le bord annulaire interne d'une membrane peut être entouré d'une bague intérieure et d'une bague extérieure, auxquelles ladite membrane est solidarisée par vulcanisation.

Avantageusement, l'organe rotor est monté entre les deux branches d'une chape le reliant à la pale ou à la pièce d'attache de ladite pale. Les branches de ladite chape peuvent être d'une pièce avec la pièce d'attache. Ladite chape peut être la pièce de liaison.

La description qui va suivre est purement illustrative et non limitative. Elle doit être lue en regard des dessins annexés.

Sur ces dessins :
- la Figure 1 est une vue en coupe schématique avec arrachement partiel du moyeu d'une tête de rotor conforme à l'invention et d'une pièce d'attache d'une pale associée audit moyeu,
- la Figure 2 est une vue selon la ligne II-II de la Figure 1,
- la Figure 3 est une vue en coupe selon le plan de la Figure 1, avec arrachements, du dispositif d'amortissement associé à la pièce d'attache représentée sur ladite Figure 1,
- la Figure 4 est une vue en coupe selon la ligne IV-IV de la Figure 3,
- la Figure 5 illustre schématiquement la cinématique de l'amortissement des mouvements de traînée de la pièce d'attache des Figures 1 à 4, dans un plan tournant avec le rotor de l'aérodyne,
- la Figure 6 illustre schématiquement, dans un plan tournant avec le rotor de l'aérodyne autour de l'axe dudit rotor, et passant par ledit axe, la cinématique des mouvements de battement de la même pièce d'attache,
- la Figure 7 est une vue en coupe semblable à la Figure 1 d'une tête de rotor conforme à un deuxième mode de réalisation de l'invention,
- la Figure 8 est une vue en coupe selon la ligne VIII-VIII de la Figure 7,
- la Figure 9 est une vue en coupe, avec arrachements, dans le plan de la Figure 7 du dispositif d'amortissement associé à la pièce d'attache représentée sur les Figures 7 et 8,
- la Figure 10 est une vue selon la ligne X-X de la Figure 9,
- la Figure 11 illustre schématiquement la cinématique d'amortissement des mouvements de traînée de la pièce d'attache des Figures 7 à 10, dans un plan tournant avec le rotor de l'aérodyne autour de son axe,
- la Figure 12, enfin, illustre schématiquement la cinématique des mouvements de battement de la même pièce d'attache, dans un plan tournant avec le rotor de l'aérodyne autour de l'axe dudit rotor, et passant par ledit axe.

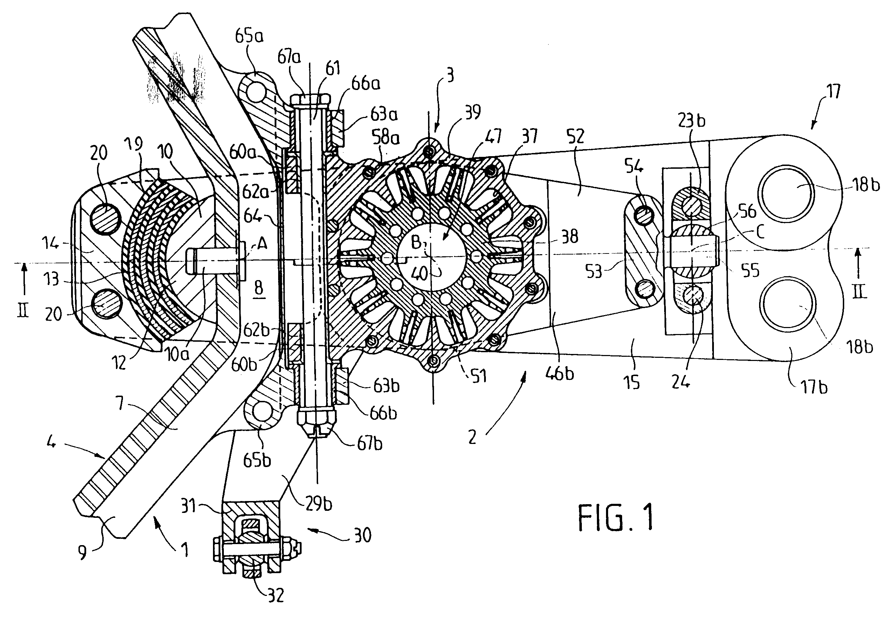

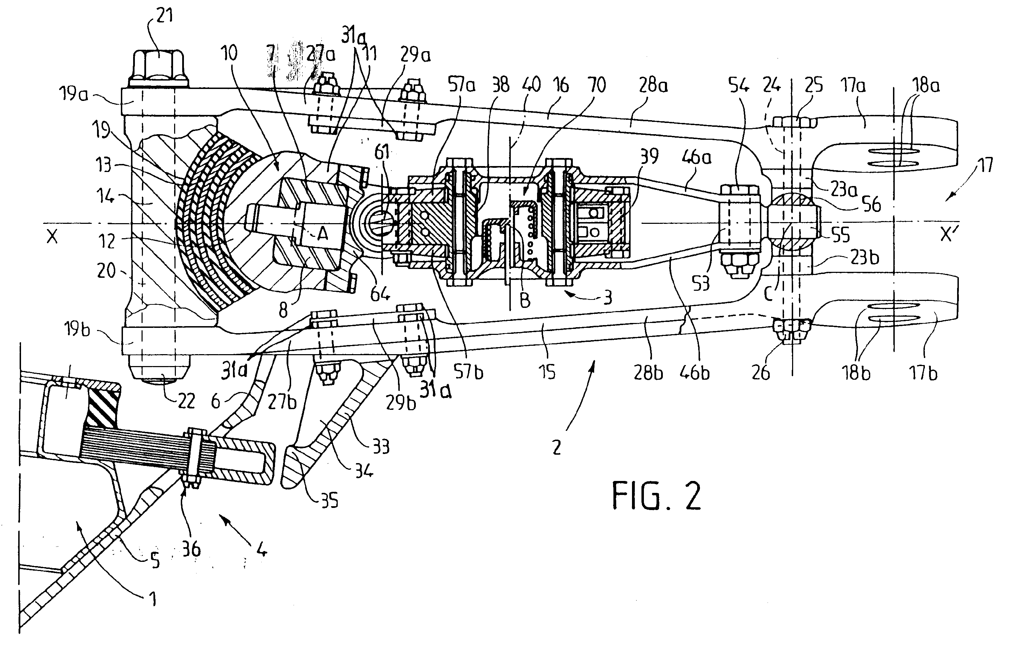

En se référant plus particulièrement aux Figures 1 et 2, on voit qu'une tête de rotor conforme à un premier mode de réalisation de l'invention comporte essentiellement un moyeu 1, constitué par la partie supérieure d'un mât-moyeu tubulaire intégré tel que décrit dans le brevet FR-2.584.996 de la demanderesse et sur lequel sont articulées en battement, pas et trainée, des pièces 2 d'attache aux pales (non représentées). Chaque pièce d'attache 2 est associée à un dispositif d'amortissement 3 monté fonctionnellement entre ledit moyeu 1 et ladite pièce d'attache 2 et destiné à amortir les mouvements de trainée de ladite pièce d'attache 2 et de la pale qui lui est associée.

La partie mât (non représentée) dudit moyeu 1 est prolongée coaxialement par un corps tubulaire de moyeu 4 qui s'évase à partir dudit mât, d'une part, par une première partie tronconique 5, et, d'autre part, par une deuxième partie tronconique 6 prolongeant ladite première partie 5 à partir de sa périphérie la plus évasée, avec un angle de conicité inférieur. Cette deuxième partie tronconique 6 porte une ceinture 7 qui l'entoure annulairement à sa périphérie extrême. Le plan médian de ladite ceinture 7 est sensiblement perpendiculaire à l'axe du rotor et du moyeu 1. Le contour délimité dans ledit plan par ladite ceinture 7 est un polygone pseudo-régulier, à sommets arrondis et à petits côtés 8 égaux et rectilignes alternant avec des grands côtés 9 égaux et rectilignes, le nombre de petits côtés 8 étant égal au nombre de grands côtés 9 et au nombre de pales du rotor. Les petits et grands côtés 8 et 9 admettent une même section droite en forme de U dont le fond est du côté de l'axe du rotor et dont les branches s'étendent vers l'extérieur dudit rotor, chacun des côtés 8 ou 9 étant tangeant par son fond en sa partie milieu à la partie tronconique supérieure 6.

Sur chacun des petits côtés 8 de la ceinture 7 est emboîté un étrier 10 ayant une section droite en forme de U délimitée par deux branches 11 et un fond 12 épousant sensiblement respectivement les surfaces externes des branches et du fond du petit côté 8 de la ceinture 7 auquel il est associé, ledit étrier étant maintenu sur ledit petit côté 8 par l'intermédiaire d'une vis 10a, dont la tête s'appuie sur la face radiale externe du fond dudit petit côté et dont la tige filetée traverse ledit fond du petit côté 8 pour s'emboîter dans un alésage complémentaire dont est muni le fond 12 et avec le filetage duquel coopère le filetage de la vis 10a. La surface radiale interne de ce fond 12 est une portion de sphère, dont le centre fictif se trouve sur la partie médiane du petit côté 8, à égale distance des grands côtés 9 qui prolongent ledit petit côté 8 et sensiblement au milieu de son épaisseur. Un tel étrier 10 constitue l'armature radiale externe d'une butée lamifiée sphérique 13, qui sert, de façon désormais classique, d'articulation de battement, pas et traînée ainsi que de moyens de retenue à l'encontre des forces centrifuges pour la pièce d'attache 2 et la pale qui lui sont associées. Cette butée lamifiée sphérique 13 comporte essentiellement une partie centrale lamifiée constituée d'un empilement de couches en forme de calottes sphériques alternativement rigides, par exemple métalliques, et en un matériau élastique, tel qu'un caoutchouc synthétique, par exemple en élastomère de silicone, cette partie centrale lamifiée étant vulcanisée entre deux armatures rigides, par exemple métalliques, dont l'une est le fond 12 et dont l'autre est une armature interne 14, solidarisée à la pièce d'attache 2.

Cette pièce d'attache 2, est constituée quant à elle essentiellement par deux plaques 15 et 16 rigides, sensiblement identiques et disposées l'une en regard de l'autre symétriquement par rapport au plan de la pale qui lui est associée, ainsi que par rapport à l'axe de celle-ci, lesdites plaques 15 et 16 s'étendant le long dudit axe. Ces deux plaques 15 et 16 définissent entre elles, à leur extrémité la plus éloignée de l'axe du rotor, une chape 17 destinée à recevoir le pied de ladite pale. Ce pied de pale est retenu entre les deux branches 17a et 17b de cette chape 17 par deux broches (non représentées) traversant perpendiculairement ladite pale ainsi que lesdites branches 17a et 17b au niveau d'orifices 18a et 18b ménagés pour les recevoir. Ces deux plaques 15 et 16 s'étendent à partir des branches 17a et 17b définissant ladite chape 17 sensiblement en s'écartant l'une de l'autre jusqu'à l'armature interne 14 de la butée lamifiée sphérique 13 qui leur sert d'entretoise à leur extrémité opposée au pied de la pale. Chacune de ces deux plaques 15 et 16 a un contour sensiblement trapézoïdal isocèle allongé dont la grande base est au niveau de l'extrémité libre de la chape 17, sa petite base étant disposée à l'autre extrémité de ladite pièce d'attache 2, c'est-à-dire sensiblement au niveau de l'armature interne 14. Cette dernière étant disposée à l'intérieur du corps du moyeu 4, la plaque inférieure 15 traverse ledit corps tubulaire 4 au niveau d'une ouverture ménagée à cet effet dans la partie tronconique 6 supérieure.

L'armature interne 14 a, quant à elle, une forme délimitée par deux faces identiques en contact avec les plaques 15 et 16 et sensiblement trapézoïdales isocèles reliées entre elles par des génératrices perpendiculaires aux plans médians desdites plaques 15 et 16, la petite base desdites faces coïncidant avec la petite base des plaques 15 et 16. Sur la surface de l'armature 14, qui fait face à la chape 17 à l'intérieur de ladite pièce 2, est ménagé un évidement 19 en forme de calotte sphérique qui reçoit la partie centrale de la butée lamifiée sphérique 13. Les plaques 15 et 16 sont terminées, au niveau de leur surface en contact avec ladite armature interne 14 par des pattes référencées respectivement par 19b et 19a qui sont légèrement en surépaisseur vers l'intérieur de ladite pièce 2 par rapport aux parties 27a et 27b des plaques 15 et 16 qu'elles prolongent. Ces pattes 19a et 19b sont solidarisées à l'armature interne 14 par l'intermédiaire de deux boulons 20 qui traversent ladite armature interne 14 et lesdites pattes 19a et 19b perpendiculairement au plan de traînée de la pale correspondante. La tête 21 d'un boulon 20 s'appuie sur la surface externe de la plaque 16, l'extrémité filetée de la tige dudit boulon 20 débouchant en saillie sous la plaque 15 et étant associée à un écrou 22 dont le filetage coopère avec le filetage de ladite tige pour maintenir ledit écrou en appui sur la surface externe de ladite plaque 15.

Les deux plaques 15 et 16 sont également maintenues l'une par rapport à l'autre sensiblement au niveau du fond de la chape 17 qui forme entretoise entre lesdites plaques. Ce fond est constitué par deux épaulements 23a et 23b s'étendant chacun sensiblement perpendiculairement à la plaque 16 ou 15 à laquelle il est respectivement associé, vers l'intérieur de la pièce d'attache 2. Ces deux épaulements 23a et 23b sont maintenus l'un contre l'autre par l'intermédiaire de deux boulons 24 répartis selon une largeur des plaques 15 et 16 et traversant lesdites plaques 15 et 16 et lesdits épaulement 23a et 23b. La tête 25 d'un tel boulon 24 est en appui sur la surface supérieure de la plaque 16, dans un logement de celle-ci ménagé à cet effet, l'extrémité filetée de la tige dudit boulon 24 opposée à ladite tête 25 étant associée à un écrou 26 maintenu, par coopération de son filetage avec le filetage de ladite tige, en appui sur la surface inférieure et externe de la plaque 15. Ces épaulements 23a et 23b sont portés chacun par une partie 28a et 28b des plaques 15 et 16 prolongées par les parties 27a et 27b qui portent les pattes 19a et 19b et qui sont elles-mêmes en surépaisseur vers l'intérieur de la pièce 2 par rapport aux parties 28a et 28b.

Sur chacune des parties 27a et 27b est montée une branche transversale 29a ou 29b, ces deux branches 29a et 29b portant le levier 30 de commande de pas de ladite pièce d'attache 2 et de la pale qui lui est associée. Ces deux branches 29a et 29b sont maintenues en appui sur les surfaces intérieures des parties 27a ou 27b, entre les têtes de quatre boulons 31a et les écrous qui leur sont associés, lesdits boulons traversant lesdites branches 29a et 29b ainsi que lesdites parties 27a et 27b. Ces branches 29a et 29b ont chacune un bord s'étendant sensiblement le long de la ligne de décrochement entre les parties 27a ou 27b et les parties 28a ou 28b et ont une largeur correspondant sensiblement à une demi-largeur desdites parties 27a ou 27b. Ces branches 29a et 29b définissent ensemble un demi-manchon d'une pièce avec le levier de commande de pas 30 qui est en saillie latérale d'un côté de la pièce de liaison 2, légèrement incliné vers le corps de moyeu 1, ce levier de commande de pas 30 se terminant par une chape 31 d'articulation à rotule sur l'extrémité supérieure d'une bielle de pas 32 reliée à un dispositif à plateau cyclique (non représenté). Le centre de la chape 31 se trouve sensiblement dans le plan médian de la ceinture annulaire 7 du corps de moyeu 4.

La plaque inférieure 15 de la pièce de liaison 2 est également solidaire, au niveau de sa partie 27b, d'une butée basse de battement 33 en saillie sous la face inférieure de ladite plaque 15, cette butée basse 33 ayant sensiblement une section triangulaire rectangle et étant rigidifiée par une nervure 34 s'étendant de sa base au niveau de la plaque 15 jusqu'à son extrémité opposée, l'ensemble étant d'une seule pièce avec ladite plaque 15 ou fixé sur ladite plaque 15 par l'intermédiaire des boulons 31a maintenant la branche 29 sur ladite plaque. A son extrémité inférieure, la butée basse de battement 33 est terminée par un épaulement 35 en surépaisseur destiné à coopérer avec un anneau réciproque 36 de structure connue, qui est monté autour du moyeu 1 de façon à limiter les battements des pales vers le bas ainsi que cela a été décrit dans la demande de brevet FR-2.636.914 de la demanderesse.

Le dispositif d'amortissement 3 associé à la pièce d'attache 2 est du type rotatif à amortissement hydro-élastique. Il comprend essentiellement deux organes 38 et 39, aptes à pivoter l'un par rapport à l'autre autour d'un axe de pivotement commun et dont les mouvements relatifs sont amortis hydro-élastiquement. L'un 38 desdits organes, désigné par la suite par organe rotor, est monté à l'intérieur de l'autre 39 desdits organes, désigné quant à lui, par la suite, par organe stator.

En se référant plus particulièrement aux Figures 1 à 4, on voit que l'organe rotor 38 a une forme extérieure principale cylindrique à section droite circulaire. Il est monté dans un évidement de l'organe stator 39 délimité par une paroi dont la surface intérieure a également une forme principale cylindrique à section circulaire, lesdits organes 38 et 39 étant co-axiaux, leur axe commun 40 étant leur axe de pivotement relatif. L'enveloppe 37 cylindrique de l'organe stator 39 ainsi définie a une hauteur qui correspond sensiblement à une demi hauteur de l'organe rotor 38, les plans médians de l'organe stator 39 et de l'organe rotor 38 étant sensiblement confondus. Cette enveloppe 37 est munie d'ailettes 41 réparties régulièrement sur son pourtour en s'étendant radialement jusqu'à proximité immédiate de la surface externe cylindrique de l'organe rotor 38 sur une hauteur qui correspond à la hauteur de l'enveloppe 37. Ces ailettes 41 ont une section droite dans le plan médian sus-mentionné sensiblement en forme de trapèze isocèle, dont la grande base se trouve au niveau de la paroi cylindrique 37.

L'organe rotor 38 est quant à lui également muni de palettes 42 réparties régulièrement sur son pourtour, lesdites palettes 42 s'étendant radialement de la surface externe de l'organe rotor 38 jusqu'à proximité immédiate de l'enveloppe cylindrique 37 de l'organe stator 39, en regard de laquelle elles sont très exactement disposées, leur hauteur correspondant à celle de ladite enveloppe 37. Le nombre de palettes 42 est égal au nombre d'ailettes 41, une palette 42 étant comprise entre deux ailettes 41 et réciproquement. Chaque palette 42 est constituée par deux ailettes 43 parallèles et côte-à-côte. Chaque ailette 43 est traversée par deux orifices 44 circulaires de même rayon disposés l'un au-dessus de l'autre selon une de ses hauteurs, les orifices 44 des deux ailettes 43 d'une même palette 42 étant en regard les uns des autres. Deux orifices 44 en regard l'un de l'autre et appartenant à une même palette 42 sont associés à une même lamelle métallique 45 repliée qui s'étend radialement sur la surface intérieure de l'évidement en forme de V délimité par les deux ailettes 43 qui portent ces orifices 44, de l'extrémité de l'une de ces deux ailettes 43, en recouvrant notamment l'orifice 44 traversant ladite ailette 43, jusqu'au fond dudit évidemment, puis dudit fond le long de l'autre ailette 43, jusqu'au bord de l'autre orifice 44, sans le recouvrir. Chaque palette 42 est ainsi associée à deux branches d'une lamelle 45. Pour une même ailette 43, l'un des orifices 44 est associé à une branche de la lamelle 45 qui lui est superposée et l'obture en position de repos, tandis que l'autre des orifices 44 n'est aucunement recouvert. De cette façon, sur une même palette 42, chaque orifice 44 non recouvert par une branche de lamelle 45 est en regard de celui des orifices 44 de l'ailette 43 à laquelle il fait face, qui est obturé par une branche de lamelle métallique 45, et réciproquement. Ces branches de lamelles métalliques 45 servent de clapets pour le dispositif d'amortissement hydro-élastique.

L'organe rotor 38 est monté entre deux branches référencées par 46a et 46b d'une chape 46. L'organe rotor 38 étant traversé en son intérieur par un évidement 47 dont la forme est principalement cylindrique, et qui est axé sur ledit axe 40, il est ménagé sur chacune de ces deux branches 46a et 46b une empreinte annulaire 48a ou 48b destinée à recevoir la paroi cylindrique dudit organe rotor 38 à chacune de ses extrémités. Cette paroi cylindrique de l'organe rotor 38 est en outre traversée sur toute sa hauteur par des alésages filetés 49 destinés à recevoir à chacune de leurs extrémités des vis 50 maintenant lesdites branches 46a et 46b sur l'organe rotor 38 par coopération de leur filetage avec les filetages intérieurs desdits alésages 49, leurs têtes s'appuyant sur les plateaux annulaires que sont les surfaces extérieures des fonds des empreintes annulaires 48a et 48b.

Ces deux branches 46a et 46b s'étendent sensiblement, au niveau de l'organe rotor 38, chacune avec un plan médian perpendiculaire à l'axe de pivotement 40, selon un contour 51 en demi-cercle centré sur ledit axe 40 et dont le diamètre principal correspond à un diamètre de l'enveloppe 37, ledit contour 51 étant prolongé par une partie 52 ayant sensiblement une délimitation trapézoïdale isocèle dont la grande base est constituée par le susdit diamètre. Lesdites parties trapézoïdales 52 sont entretoisées l'une par rapport à l'autre vers leur extrémité opposée à l'organe rotor 38, c'est-à-dire au niveau de leur petite base, par l'intermédiaire d'une pièce entretoise 53 sensiblement parallèlipipèdique, dont la hauteur correspond sensiblement à celle de l'enveloppe 37, dont une longueur correspond sensiblement à ladite petite base et dont les largeurs latérales au niveau des côtés desdites branches 46a et 46b sont sensiblement arrondies, les côtés de ladite pièce entroise 53 ayant ainsi une forme en arc de cylindre s'étendant entre lesdites branches 46a et 46b. Ces parties trapézoïdales 52 s'étendent à partir de ladite entretoise 53 en s'écartant l'une de l'autre jusqu'au niveau de l'organe stator 39 où elles se prolongent dans les plans médians ci-dessus mentionnés. Elles sont solidarisées à ladite pièce entretoise 53 par deux boulons 54 qui la traversent et qui sont répartis dans la longueur de ladite pièce entretoise 53, leur tête s'appuyant sur la surface externe de la branche supérieure 46a, les extrémités libres desdits boulons 54 étant filetées et coopérant avec un écrou qui s'appuie sur la surface extérieure de la branche inférieure 46b. Cette entretoise 53 est prolongée, à partir de sa face la plus éloignée des organes rotor et stator 38 et 39, par une tige 55 cylindrique de petit diamètre, qui est perpendiculaire à ladite face et qui est axée sur l'un des diamètres dudit organe rotor 38 confondu avec l'axe longitudinal de changement de pas de la pale en position neutre de ladite pale. Cette tige 55 est emboîtée dans un alésage complémentaire qui traverse une rotule sphérique 56 montée libre en rotation autour de son centre entre deux calottes complémentaires dont sont munies au niveau de leurs surfaces en regard l'une de l'autre, les épaulements 23a et 23b formant ensemble le fond de la chape 17. La tige 55 est apte à coulisser axialement par rapport à l'alésage complémentaire qui la reçoit dans la rotule 56.

L'enveloppe cylindrique principale 37 de l'organe stator 39 est montée entre deux couronnes 57a et 57b, annulaires, co-axiales audit organe 39, et sensiblement plates, les surfaces en regard desdites couronnes 57a et 57b étant perpendiculaires à l'axe 40, leur surface extérieure ayant une forme légèrement tronconique s'évasant de leur bord annulaire externe jusqu'à leur bord annulaire interne, lequel se trouve au niveau de la paroi externe de l'organe rotor 38. Ces couronnes 57a et 57b sont solidarisées aux parois de ladite enveloppe cylindrique 37 par des boulons 58 qui les traversent dans leur hauteur, la tête desdits boulons 58 s'appuyant sur la surface extérieure de la couronne supérieure 57a, la tige d'un tel boulon 58 débouchant de la couronne inférieure 57b par une partie filetée coopérant avec un écrou 59 qui s'appuie sur la surface extérieure de ladite couronne 57b. La paroi de ladite enveloppe cylindrique 37 est munie d'autant d'alésages 58a pour recevoir ces boulons 58 que d'ailettes 41, l'axe de chaque alésage 58a étant disposé dans le prolongement radiale d'une telle ailette 41. Il est prévu, pour faciliter le montage desdits boulons 58 ainsi que des écrous qui leurs sont associés, des orifices circulaires 59a traversant les branches 46a et 46b symétriquement par rapport à leur axe de symétrie, lesdits orifices étant d'un diamètre suffisant pour permettre le passage des têtes desdits boulons 58, des écrous 59, et d'outils de serrage tels que des clefs.

La paroi de l'enveloppe cylindrique 37 est prolongée, dans sa partie la plus proche du moyeu 1 et de la ceinture 7 par deux pattes 60a et 60b, dont l'épaisseur correspond à la hauteur de l'enveloppe 37 et qui sont réparties symétriquement par rapport à un plan passant par l'axe 40 et l'axe du rotor du giravion, en s'étendant de ladite enveloppe 37 jusqu'à sensiblement la ceinture 7. Ces pattes sont en regard chacune de l'intersection entre le petit côté 8 portant la pièce d'attache 2 correspondante et respectivement l'un des grands côtés 9 qui l'entourent. Chacune des deux pattes 60a et 60b est traversée par un alésage, les deux alésages associés à ces deux pattes 60a et 60b étant coaxiaux et de même diamètre, leur axe commun étant parallèle audit petit côté 8. Ces deux pattes 60a et 60b reçoivent toutes deux un même arbre 61, tourillonné entre deux paliers extrêmes 62a et 62b, emboîtés respectivement dans lesdits alésages. L'arbre 61 fait saillie par rapport à chacune des deux pattes 60a et 60b et est monté par ses parties en saillie entre deux oreilles 63a et 63b d'une pièce de liaison 64, les deux pattes 60a et 60b étant montées entre ces deux oreilles 63a et 63b qui s'étendent chacune latéralement par rapport à respectivement l'une des pattes 60a et 60b, parallèlement à celle-ci. Cette pièce de liaison 64 s'étend le long du petit côté 8 en se prolongeant au-delà des oreilles 63a et 63b sur une partie des grands côtés 9 qui l'entourent pour s'y appuyer. Plus précisément, cette pièce de liaison 64 forme capot, au niveau dudit petit côté 8, pour la ceinture 7 à section droite en forme de U et y est solidarisée par vissage sur les branches de l'étrier 10. Les parties de ladite pièce 64 qui se trouve sensiblement au niveau des grands côtés 9 au-delà des oreilles 63a et 63b portent deux chapes 65a et 65b solidarisées chacune d'une oreille-support en saillie par rapport aux extrémités des branches de la ceinture 7.

Chacune des oreilles 63a et 63b est traversée par un palier 66a ou 66b recevant l'arbre 61 dont une extrémité est munie d'une tête 67a qui vient s'appuyer sur la surface externe de l'oreille 63a et dont l'autre extrémité est filetée, son filetage coopérant avec le filetage complémentaire d'un écrou 67b qui s'appuie sur la surface extérieure de l'oreille 63b.

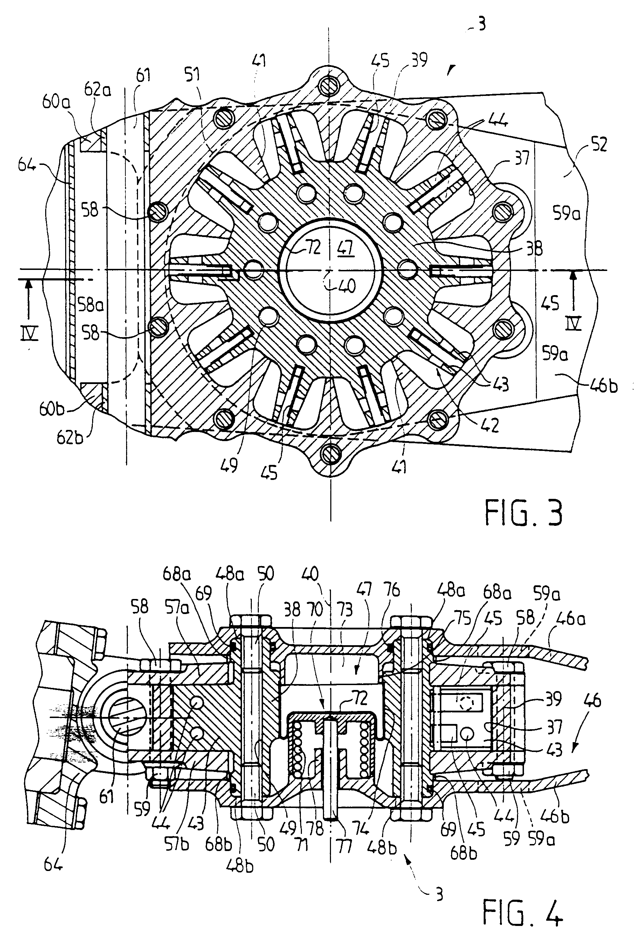

En se référant plus particulièrement aux Figures 3 et 4, on notera que les chambres délimitées entre les organes stator et rotor 38 et 39 sont remplies d'un fluide à haute viscosité destiné à amortir les mouvements relatifs desdits organes. Ce fluide est notamment contenu dans les volumes délimités par les ailettes 41, les palettes 42, la paroi cylindrique principale de l'organe 38 et l'enveloppe 37, les couronnes annulaires 57a et 57b, ainsi que par des membranes élastiques 68a et 68b qui relient les surfaces desdites couronnes en regard des branches 46a et 46b de la chape 46 à l'organe rotor 38, au niveau des empreintes annulaires 48a et 48b. Lesdites empreintes annulaires 48a et 48b et l'organe rotor 38 sont associés à des joints statiques d'étanchéité 69 toriques montés entre la surface extérieure dudit organe rotor 38 et les parois annulaires de plus grand diamètre desdites empreintes 48a et 48b. L'organe rotor 38 est traversé dans son épaisseur tubulaire par des alésages (non représentés) disposés radialement au niveau des couronnes 57a et 57b, ces alésages mettant en communication les volumes sus-définis et l'évidement 47, dans lequel ils débouchent au niveau de sa partie supérieure, partie dont le diamètre est légèrement supérieur au diamètre de la partie principale et médiane 74 dudit évidement. La paroi de l'organe 38 qui délimite ladite partie supérieure se trouve en regard d'une jupe de centrage 75 qui s'étend intérieurement de la branche supérieure 46a jusqu'à la partie médiane 74, les parois externes de ladite jupe 75 coopérant avec les parois intérieures de ladite partie 74.

L'évidement 47 est associé à un piston 70 comportant un fond, qui est un disque de diamètre inférieur au diamètre de la partie 74, entouré par une paroi cylindrique s'étendant dudit fond vers la branche inférieure 46b, ledit piston 70 étant centré sur l'axe 40 et étant monté sur un ressort 71 hélicoïdal disposé en son intérieur, ledit ressort 71 étant maintenu en compression entre la branche 46b et le fond dudit piston 70. Ce piston 70 porte une membrane à déroulement 72 dont le bord est encastré sur une périphérie de la partie cylindrique principale 74 au niveau de la jupe de centrage 75, cette membrane à déroulement 72 délimitant ainsi dans la partie supérieure de l'évidement 47 une chambre 73 recevant le fluide des chambres de travail et servant de chambre de compensation des dilatations du fluide. Un joint torique 76 est monté entre les parois internes de l'organe rotor 38 et la paroi annulaire de plus petit diamètre de l'empreinte supérieure 48a, de façon à assurer l'étanchéité entre ces deux pièces, et plus particulièrement de façon à empêcher toute fuite possible par l'intermédiaire des alésages recevant les vis 50. Ce piston 70 est en outre associé à une goupille 77 de centrage qui est solidarisée sur son fond et qui s'étend axialement dudit fond jusqu'à la branche 46b qu'elle traverse au niveau d'un manchon cylindrique de maintien 78 qui lui est coaxial et qui s'étend de la branche 46b vers le fond du piston 70.

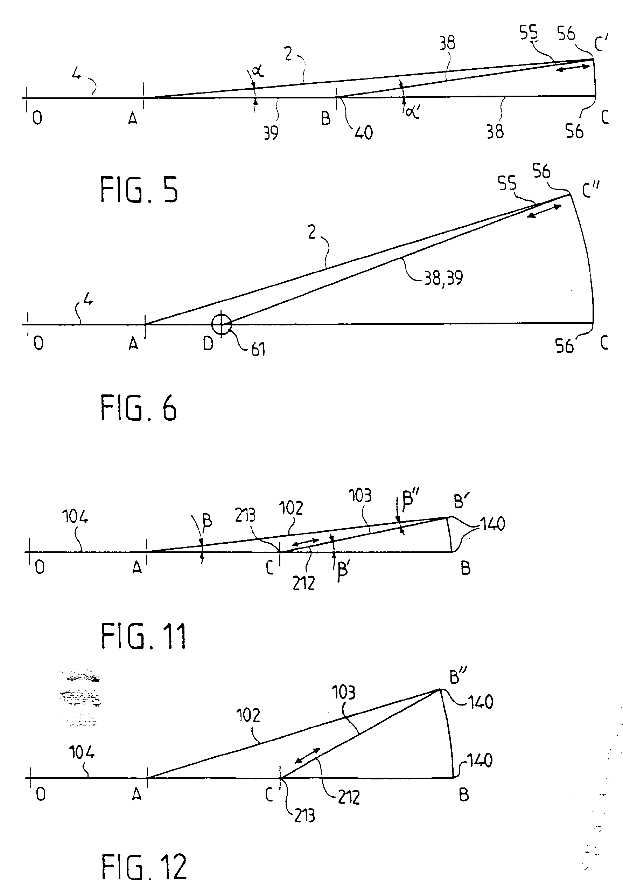

En fonctionnement, un tel dispositif d'amortissement est sollicité de la façon qui va maintenant être décrite. Dans ses mouvements de trainée, la pale et la pièce d'attache 2, associées audit amortisseur 3, pivote autour du centre A de la butée lamifiée sphérique 13, ce point A étant fixe par rapport au corps de moyeu 4. En se référant plus particulièrement à la Figure 5, qui illustre schématiquement les mouvements des éléments constituant principalement ladite pièce d'attache 2 dans un plan de trainée tournant avec le corps de moyeu 4 autour de l'axe du rotor du giravion, on voit que lorsque ladite pièce d'attache 2 tourne autour du point A d'un angle α, le centre de la rotule 56, qui est fixe par rapport à ladite pièce 2, passe d'un point C à un point C' par rotation simple autour dudit centre A. L'organe stator 39 étant maintenu solidaire dans ledit plan de traînée de la ceinture 7 du corps de moyeu 4, par l'intermédiaire de la liaison pivot réalisée par l'arbre 61, l'axe de pivotement relatif 40 des organes stator et rotor 38 et 39 reste fixe par rapport audit corps de moyeu 5 et se maintient donc en un point B fixe dans ledit plan de traînée. L'organe rotor 38 qui est articulé d'une part à l'une de ses extrémités en pivotement autour de la rotule 56, et d'autre part en pivotement autour dudit axe 40, pivote alors nécessairement, d'un angle α' autour dudit point B pour accompagner le pivotement de la rotule 56 autour du point A, la tige 55 coulissant sensiblement, ainsi que l'indique la double flèche représentée sur la Figure 5, dans l'évidement complémentaire de la rotule 56 dans laquelle elle est montée, de façon à accompagner la légère modification de distance entre l'axe 40 et le centre de la rotule 56 et à rendre compatible le pivotement d'un angle α' de l'organe rotor 38 autour de l'axe 40 et le pivotement d'un angle α de son point d'articulation sur la rotule 56, autour du point A, avec la pale et la pièce d'attache 2.

C'est de cet angle α' dont pivotent relativement les organes stator et rotor 38 et 39 et donc dont est sollicité le dispositif d'amortissement 3 par l'intermédiaire du mouvement relatif des ailettes 41 et des palettes 42. Lors d'un tel pivotement relatif des organes stator et rotor 38 et 39, le fluide à haute viscosité se transfère de l'un à l'autre des deux volumes délimités entre deux ailettes 41 successives par une palette 42, en passant, d'une part, entre les extrémités des ailettes 43 qui se trouvent en regard de l'enveloppe 37 et ladite enveloppe 37, et, d'autre part, par les orifices de laminage 44, le laminage de fluide ainsi obtenu freinant le mouvement relatif desdits organes stator et rotor 38 et 39 et donc le mouvement de traînée depale qui correspond à ce mouvement relatif. Lors de petits mouvements de traînée, correspondant à des mouvements relatifs desdits organes rotor et stator 38 et 39 peu importants et donc à de faibles pressions différentielles entre les deux volumes sus-définis entre deux ailettes 41, les clapets 45 restent en position d'obturation sur les orifices 44 auxquels ils sont associés ; le laminage du fluide à travers les palettes 42 s'effectue alors par passage dudit fluide par les deux orifices 44 d'une même palette 42 qui ne sont pas obturés par un clapet 45 et qui sont décalés dans la hauteur de ladite palette 42 l'un par rapport à l'autre. L'amortissement ainsi réalisé pour de petits mouvements de traînée est un amortissement à fort gradient. Pour des mouvements plus importants de la pale en traînée, les clapets ou lamelles ressort 45 s'ouvrent sous l'action du fluide qui passe de l'un à l'autre des deux susdits volumes délimités entre deux ailettes 41 successives à travers principalement deux orifices 44 de laminage en regard l'un de l'autre sur une même palette 42. Le gradient d'amortissement est plus faible.

On notera encore qu'un tel dispositif d'amortissement 33 permet d'obtenir un amortissement relatif à un angle α' supérieur à l'angle α dont pivote la pale en traînée, ce d'autant plus que l'axe de pivotement 40 sera éloigné radialement à l'extérieur du centre de trainée A et proche de la rotule 56.

Par ailleurs, une telle structure d'amortissement présente l'avantage d'éviter tout couplage entre les mouvements de pas, traînée et battement. L'orientation en pas de la pale correspond en effet à un mouvement de pivotement de ladite pale et de sa pièce d'attache 2 autour de l'axe X-X' représenté sur la Figure 2, qui passe, quelle que soit la position de ladite pale, à la fois par le centre A de la butée lamifiée sphérique et le centre de la rotule 56. Dès lors, on voit qu'un changement d'orientation en pas ne modifie aucunement les positions relatives des organes rotor et stator 38 et 39. Il n'existe donc aucun couplage entre les mouvements de pas et les mouvements de trainée.

Quant aux mouvements de battement, on voit, si l'on se réfère à la Figure 6, que lors d'un tel mouvement, la pièce d'attache 2 pivote avec la pale autour du centre de la butée lamifiée sphérique A, entraînant ainsi dans son pivotement la rotule 56, dont le centre passe de C en C'' dans un plan de battement tournant avec le corps de moyeu 4 autour de l'axe du rotor. Les organes stator et rotor 38 et 39 sont alors amenés à pivoter ensemble autour de l'axe de l'arbre 61 (point D du plan de pivotement) pour accompagner le pivotement de la rotule 56, la tige 55 coulissant comme indiqué par la double flèche sur la figure sensiblement dans l'évidement complémentaire dans lequel elle est montée dans la rotule 56. Là encore, on voit que les positions relatives des organes stator et rotor 38 et 39 sont inchangées par un tel mouvement de battement : les mouvements de battement et l'amortissement de trainée sont indépendants.

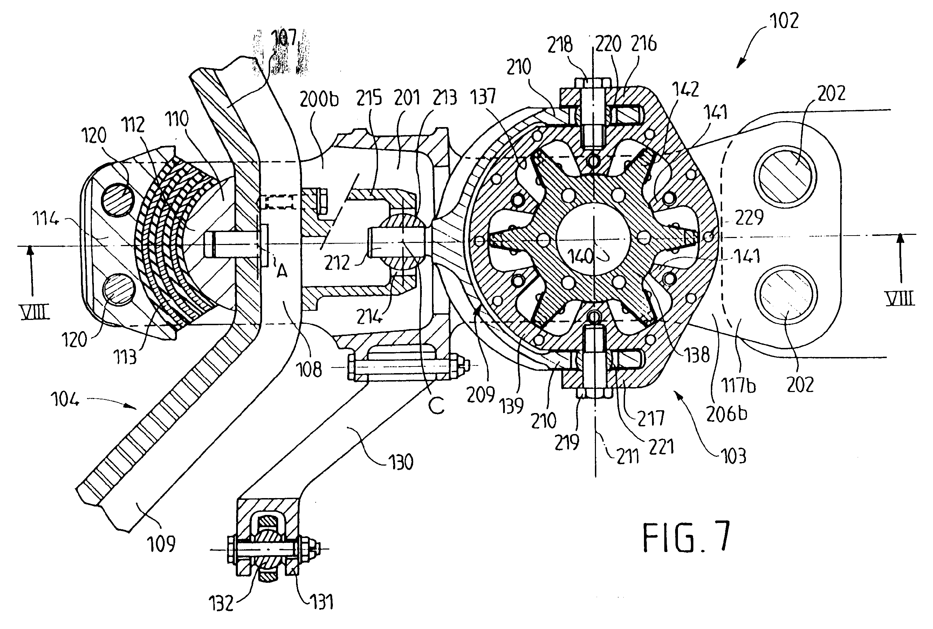

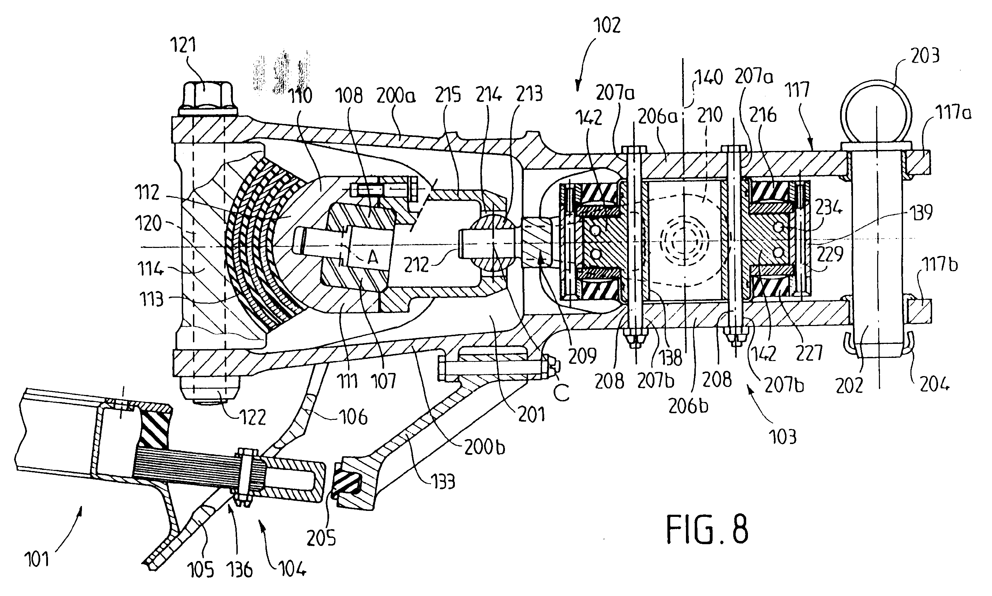

Une autre variante possible de l'invention a été représentée sur les Figures 7 à 12. On a repris pour les éléments de la tête de rotor précédemment décrite que l'on retrouve sur cette nouvelle variante, les mêmes numérotations de référence augmentées de 100.

En particulier, la tête de rotor conforme à cette nouvelle variante comporte un moyeu 101 à mât tubulaire intégré sur lequel sont articulées par l'intermédiaire de pièces d'attache 102, en battement pas et trainée des pales (non représentées), chacune associée à un dispositif d'amortissement 103 de ses mouvements de traînée, du type rotatif.

Le corps tubulaire de moyeu 104 s'évase à partir de la partie mât (non représentée) par deux parties tubulaires tronconiques 105 et 106 qui le prolongent, la partie tronconique supérieure 106 étant moins évasée que la partie tronconique 105. La partie 106 est associée à une ceinture de renforcement 107, de section droite en forme de U tournée vers l'extérieur dudit corps tubulaire 104. Cette ceinture 107 s'étend selon un contour ayant sensiblement la forme d'un polygone pseudo-régulier, à petits côtés 108 égaux alternant avec des grands côtés 109 égaux. Sur chaque petit côté 108, est encastré un étrier 110 dont le fond 112 constitue une armature externe portant une butée lamifiée sphérique 113, l'armature interne 114 de cette butée 113 étant solidaire de la pièce d'attache 102. Cette armature interne 114 est fixée par l'intermédiaire de boulons 121 et d'écrous 122 en entretoise entre les extrémités des branches supérieure 200a et inférieure 200b formant une chape radiale fourchue prolongeant vers l'intérieur du rotor un manchon central 201 de la pièce d'attache 102. A son autre extrémité, cette pièce d'attache 102 est également conformée selon une chape 117 entre les deux branches 117a et 117b de laquelle le pied de la pale correspondante est retenu par l'intermédiaire de deux broches 202 passées dans des orifices ménagés à cet effet dans ledit pied et dans lesdites branches 117a et 117b. L'une de ces broches 202 est munie à sa partie supérieure d'un anneau 203 permettant son désengagement manuel après désemboitement d'une clavette de maintien 204 la bloquant à sa partie inférieure. Ceci permet notamment, après désengagement de cette broche 202, de faire pivoter la pale autour de l'autre des deux goupilles 202 afin de replier ladite pale lorsque le giravion est au repos.

Le manchon central 201 porte latéralement le levier de commande de pas 130, dont le centre de la chape d'extrémité 131 reste au voisinage de l'axe de battement de la pale correspondante. Ce manchon 201 porte également dans sa partie inférieure une butée basse de battement 133 terminée à son extrémité inférieure par un patin d'usure amovible 205 destiné à coopérer avec un anneau réciproque 136 qui est monté, de façon connue en soi, autour du moyeu 101 afin de limiter les battements de la pale vers le bas.

Les branches 117a et 117b de la chape 117 se prolongent jusqu'au manchon central 201 en deux plaques longitudinales 206a et 206b, sensiblement planes et surépaissies vers l'intérieur de la pièce d'articulation 102 par rapport à leur partie au niveau dudit manchon 201. Chacune de ces plaques 206a et 206b est traversée dans son épaisseur par des alésages 207a et 207b dont les centres sont respectivement répartis régulièrement sur un cercle dans le plan de la plaque 206a ou 206b qu'ils traversent, dont le centre est disposé sur la longueur médiane de ladite plaque 206a, 206b et dont le rayon est sensiblement inférieur à une demi-largeur de ladite plaque. Ces alésages 207a et 207b sont prévus pour recevoir des boulons de fixation 208 engagés dans des alésages complémentaires traversant dans leur hauteur les parois d'un organe rotor 138 à corps principal cylindrique et monté entre lesdites plaques 206a et 206b, la hauteur dudit organe rotor 138 correspondant sensiblement à celle qui sépare lesdites plaques 206a et 206b. Le corps principal de cet organe rotor 138 est associé à des palettes 142 réparties régulièrement sur con contour médian. Cet organe rotor 138 est monté à l'intérieur de l'enveloppe 137 délimitée par les parois internes d'un organe stator 139. Cette enveloppe 137 a également une forme principale sensiblement cylindrique, co-axiale à l'organe rotor 138 et de hauteur légèrement supérieure à la hauteur des palettes 142 et inférieure à celle dudit organe 138, les organes rotor et stator 138 et 139 admettant un même plan médian. Ledit organe stator 139 est également muni intérieurement de palettes 141 réparties régulièrement sur sa surface intérieure de façon à ce qu'une palette 141 alterne avec une palette 142, les palettes 142 s'étendant de la surface cylindrique de l'organe rotor 138, jusqu'à la surface cylindrique interne de l'organe stator 139, les palettes 141 s'étendant de la surface de l'enveloppe 137 jusqu'à l'organe rotor 138.

L'organe stator 139 et l'organe rotor 138 sont aptes à pivoter l'un par rapport à l'autre autour d'un axe de pivotement relatif 140 qui est leur axe de révolution. Sur l'organe rotor 138 est en outre articulé en pivotement autour d'un axe 211 dans son plan médian et sensiblement perpendiculaire à l'axe de la pale, ledit axe 211 passant par l'axe 140, un étrier 209 dont les branches 210 sont disposées selon sensiblement un arc en demi cercle dont le diamètre principal est sur ledit axe de pivotement 211 et qui est profilé avec un section droite sensiblement en forme de I. L'étrier 209 est prolongé radialement en sa partie la plus éloignée de son axe de pivotement 211 et des extrémités des branches 210 par une tige cylilndrique 212. Cette tige 212 est emboîtée dans un évidement complémentaire ménagé dans une rotule 213 apte à pivoter autour de son centre, qui est quant à lui, fixe par rapport au corps de moyeu 101, ladite rotule 213 étant montée dans un évidement complémentaire 214 ménagé dans un capot 215 solidarisé de l'étrier 210 par vissage sur les branches 111. La tige 212 est apte à coulisser dans son logement complémentaire dans la rotule 213.

L'organe stator 139 comporte de part et d'autre des extrémités des branches 210, par rapport à l'axe de la pale, deux joues 216 et 217 s'étendant latéralement dans le prolongement des parois dudit organe stator 139 qui sont opposées audit étrier 209. Ces joues 216 et 217 forment avec les parois de l'organe stator 139 qui se trouvent au niveau de l'axe 211, entre les branches 210, deux chapes latérales recevant les extrémités desdites branches 210. Les deux joues 216 et 217, ainsi que les parois dudit organe rotor 139 qui sont en regard, sont munies d'alésages permettant d'associer chacune desdites chapes ainsi définies à une vis 218 ou 219 réalisant l'axe de pivotement relatif de l'étrier 209 sur l'organe stator 139, la tête d'une telle vis 218 ou 219 s'appuyant sur la surface extérieure de la joue 216 ou 217 correspondante, son extrémité opposée à ladite tête étant filetée et montée à l'intérieur d'un alésage fileté complémentaire dont est muni radialement l'organe rotor 139 au niveau d'une de ses palettes 141, les deux palettes 141 diamètralement opposées associées à un tel alésage étant d'une épaisseur plus importante que les autres palettes 141. Le corps d'une telle vis 218 ou 219 porte une rotule 220 ou 221 reçue dans un oeil à rotule monté sur un alésage complémentaire dont est munie l'extrémité de la branche 210 qui lui est associée.

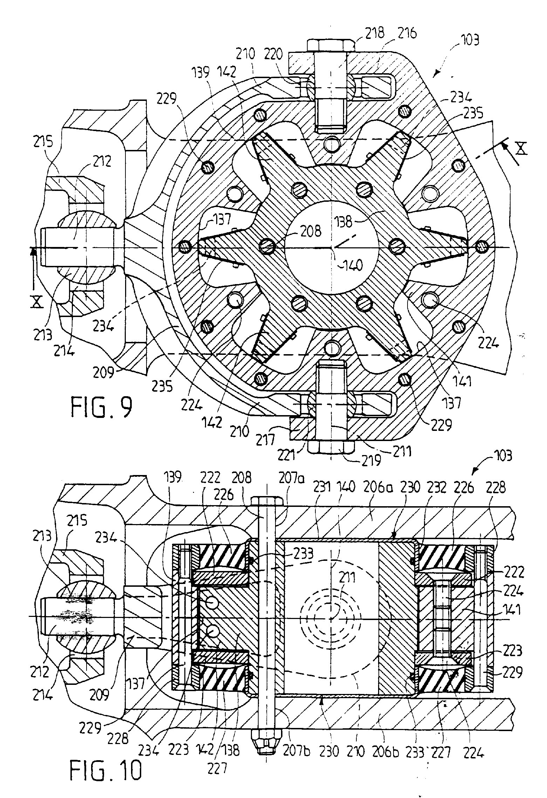

Ainsi qu'on peut le voir plus particulièrement sur la figure 10, les organes rotor et stator 138 et 139 sont associés à deux couronnes annulaires plates 222 et 223 entre lesquelles leurs palettes et ailettes 141 et 142 sont montées. Ces deux couronnes 222 et 223, axées sur l'axe 140 de pivotement relatif desdits organes, sont identiques l'une à l'autre et ont un diamètre intérieur qui correspond au diamètre extérieur de l'organe stator 138, tandis que leur diamètre extérieur correspondant au diamètre de l'enveloppe 137. Ces deux couronnes 222 et 223 sont séparées l'une de l'autre d'une distance qui correspond à la hauteur des palettes 141 et 142 et sont solidarisées aux palettes 141 de l'organe stator 139 par l'intermédiaire de vis 224 dont le filetage coopère avec le filetage intérieur d'alésages traversant chacune desdites palettes 141 dans leur hauteur. La tête des vis 224 s'appuie sur la face de la couronne 222 ou 223 à laquelle elle est associée, qui est la plus éloignée de ladite palette 141. Chaque couronne 222 ou 223 est également associée à une membrane élastique annulaire 226 ou 227, respectivement, qui est superposée à sa surface opposée aux palettes 141 et dont les diamètres intérieur et extérieur sont légèrement inférieurs à ceux desdites couronnes 222 et 223. La paroi annulaire externe de chacune de ces deux membranes 226 ou 227 est solidarisée de manière étanche par vulcanisation d'une bague 228 qui l'entoure avec une même épaisseur, les parois de l'enveloppe 137 étant ainsi montées entre deux bagues 228 qui leur sont superposées et qui les entourent avec un même profil annulaire. Chaque bague 228 est solidarisée aux parois de ladite enveloppe 137 par l'intermédiaire de vis 229 dont le filetage coopère avec un filetage complémentaire dont sont munis des alésages traversant lesdites parois cylindriques de l'enveloppe 137 dans toute leur hauteur. La tête d'une telle vis 229 s'appuie sur la bague 228 qui est superposée à la surface inférieure des parois de l'enveloppe 137, la longueur du corps de ladite vis 229 étant supérieure à la hauteur de ladite enveloppe 137, sa partie inférieure débouchant, après avoir traversé les parois de ladite enveloppe 137, dans un alésage complémentaire dont est munie la bague 228 supérieure comportant un filetage coopérant avec le filetage de l'extrémité de la susdite vis 229. Chaque membrane annulaire élastique 226 ou 227 est également solidarisée, par sa paroi annulaire intérieure, du bord d'un capot 230 emboîté respectivement sur les parties supérieure et inférieure de l'organe rotor 138. Un tel capot 230 est constitué par un fond 231 en forme de disque de même diamètre que le corps principal de l'organe rotor 138, sur lequel il est coaxialement disposé, ledit fond 231 étant entouré à sa périphérie par un bord cylindrique 232 qui porte par sa surface exterieure la paroi intérieure de la membrane 226 ou 227 à laquelle il est solidarisé de manière étanche par vulcanisation et qui s'étend dudit fond jusqu'à la couronne 222 ou 223 qui est associée à ladite membrane annulaire.

Entre la paroi externe cylindrique d'une extrémité de l'organe rotor 138 et la paroi interne du bord 232 emboîté sur ladite paroi, est monté un joint annulaire 233 assurant l'étanchéité entre les deux pièces. Les volumes délimités par l'enveloppe cylindrique 137 de l'organe stator 139, les parois cylindriques extérieures de l'organe rotor 138, les palettes et ailettes 141 et 142, les couronnes 222 et 223, les membranes annulaires élastiques 226 et 227, sont remplies d'un fluide à haute viscosité, qui circule, lors d'un mouvement relatif entre les deux organes stator et rotor 138 et 139, à travers des paires d'orifices 234 ménagés dans les palettes 142, chaque palette 142 étant traversée dans son épaisseur par deux tels orifices cylindriques 234 répartis l'un au dessus de l'autre sur sa hauteur médiane. Chaque orifice 234 est associé à chacune de ses extrémités à une lamelle ressort 235, qui s'étend devant ledit orifice le long de la palette 141 que celui-ci traverse en étant solidarisée de celle-ci par vissage vers la partie principale cylindrique de l'organe rotor 138, les deux lamelles 235 ainsi associées à une même palette 141 étant réparties de part et d'autre de celle-ci, sur deux niveaux de hauteur. Le fluide circule également sur les côtés desdites palettes 141, entre les extrémités desdites palettes et l'enveloppe 137, ainsi qu'entre les surfaces supérieures et inférieures des palettes 141 et les couronnes 222 et 223, entre les bords desdites couronnes 222 et 223 et l'enveloppe 137 et entre les membranes annulaires élastiques 226 et 227 et les faces des couronnes 222 et 223 en regard desquelles elles sont disposées. Ces membranes élastiques 226 et 227, permettent, en se déformant, d'absorber les dilatations éventuelles du fluide hydraulique, et notamment les dilatations thermiques. Sollicitées en cisaillement lors d'un pivotement rotatif des deux organes 138 et 139. Elles permettent également le rappel élastique desdits organes 138 et 139 ainsi que cela a été plus particulièrement décrit dans le brevet FR-2.592.449 de la demanderesse, portant sur des dispositifs d'amortissement du type de celui de la structure de tête de rotor ici décrite, le fonctionnement du dispositif d'amortissement 103 étant sensiblement identique à celui des dispositifs de ce brevet FR-2.592.449.

En se référant plus particulièrement aux Figures 11 et 12, on voit qu'en fonctionnement, une telle structure de tête de rotor est sollicitée de la façon qui va maintenant être décrite. Lors d'un pivotement de traînée de la pale et de sa pièce d'attache 102 d'un angle β autour du centre A de la butée lamifiée sphérique 113 dans un plan tournant avec le rotor du giravion, l'organe rotor 138, solidaire de la pièce d'attache 102, pivote d'un même angle β avec ladite pale autour dudit centre A, l'axe 140 accompagnant ce pivotement et passant dans ledit plan tournant d'un point B à un point B'. La rotule 213, accompagnant les mouvements de rotation du corps de moyeu 5 autour de l'axe du rotor du giravion, reste centrée sur le point C fixe dans ledit plan, de sorte que l'organe stator 139, articulé, d'une part, en pivotement autour de l'axe 140 sur l'organe rotor 139, et d'autre part, en pivotement autour du centre de ladite rotule 212, pivote dans ledit plan tournant par rapport au centre C de la rotule, d'un angle référencé par β' sur la Figure 11. L'organe stator 139 et l'organe rotor 138 auront donc pivoté l'un par rapport à l'autre d'un angle β'' complémentaire de β et β' et égal à (180° + β-β'), β' étant en tout état de cause supérieur à β. Cet angle β'' est d'autant plus important que la distance séparant le centre A de la butée lamifiée sphérique 113 du centre C de la rotule 213, radialement à l'extérieur de A, est proportionnellement grande devant la distance séparant le centre C de ladite rotule 213 de l'axe 140 de pivotement relatif entre les deux organes 138 et 139. En outre, comme indiqué par la double flèche sur la figure, le pivotement d'un angle β de la pale autour du centre A est accompagné d'un coulissement de la tige 212 dans l'évidement complémentaire de la rotule 213 dans lequel ladite tige 212 est montée, de façon que la rotation de l'axe de pivotement autour du point A soit compatible avec le pivotement de l'organe stator 139 d'un angle β' autour du centre C.

Ainsi que cela a été plus particulièrement représenté sur la Figure 12, lors d'un mouvement de battement de la pale, l'ensemble de la pièce d'attache 2 pivote autour du centre A, entraînant dans ce mouvement de pivotement à la fois l'organe rotor 138 et l'organe stator 139. L'étrier 209, qui est articulé d'une part sur un diamètre de l'organe rotor, par l'intermédiaire des vis 218 et 219, et d'autre part sur le centre C de la rotule 213, fixe par rapport au corps de moyeu 105, pivote alors par rapport audit organe stator 139, de façon à accompagner ce mouvement de battement, la tige 212 sortant, quant à elle, légèrement de l'évidement dans lequel elle est montée sur la rotule 213.

Quant aux mouvements de pas, ceux-ci sont rendus compatibles avec les mouvements de trainée de la pale et de la pièce d'attache 102, par l'intermédiaire des rotules 220 et 221 autour desquelles les branches 210 et 211 de l'étrier 209 sont montées en pivotement diamétral sur l'organe rotor 139, ces rotules 220 et 221 autorisant un léger déboitement de l'organe rotor 139 par rapport audit étrier 209, de sorte que ledit organe stator 139 peut pivoter autour de l'axe de la pale passant par le point A au centre de la butée lamifiée sphérique 113 lorsque le point C du centre de la rotule 213 n'est pas sur cet axe, la pale et la pièce d'attache 102 étant décalées en battement par rapport à leur position de repos représentée sur la Figure 6, l'étrier 209 restant articulé autour dudit point C, tandis que l'organe stator 139 se désemboite par rapport audit étrier 209 pour accompagner l'orientation en pas de la pale.

D'autres modes de réalisation d'une tête de rotor conforme à l'invention sont bien entendu possibles. En particulier, les pales pourraient être d'une pièce avec leur pièce d'attache ; le dispositif d'amortissement pourraît être du type rotatif à amortissement visco-élastique.

## Revendications

1. Tête de rotor pour giravion, comportant un moyeu auquel chaque pale de rotor est accouplée, éventuellement par l'intermédiaire d'une pièce d'attache (2, 102), par une butée lamifiée sphérique (13, 113) autorisant les oscillations angulaires de battement et l'orientation en pas de ladite pale, ainsi que notamment ses mouvements alternés de traînée autour d'un centre (A) commun tournant avec les pales du rotor autour de l'axe dudit rotor et fixe par rapport au corps du moyeu, ladite pale étant également associée à un dispositif (3, 103) d'amortissement desdits mouvements de traînée, monté entre ladite pale et ledit moyeu (1, 101), et du type comportant deux organes (38, 39 ; 138, 139) aptes à pivoter relativement autour d'un axe commun (40, 140), les mouvements relatifs desdits organes étant amortis hydro et/ou viscoélastiquement, caractérisée en ce que d'une part, l'un (39, 138) desdits organes est monté sur l'un (1, 102) des deux éléments que constituent ladite pale ou sa pièce d'attache (2, 102) et ledit moyeu (1, 101) pour l'accompagner dans ses mouvements éventuels de traînée, l'autre (38, 139) desdits organes étant articulé par rapport à un point d'articulation (C, C', C'') sur l'autre (2, 101) desdits éléments pour garder en traînée une orientation angulaire constante par rapport à la droite reliant ledit point d'articulation (C, C', C'') à l'axe de pivotement relatif (40, 140) desdits organes (38, 39 ; 138, 139), l'un au moins desdits organes (38, 39 ; 138, 139) étant apte à se translater par rapport à l'élément sur lequel il est articulé, de façon à permettre l'adaptation de la distance séparant l'axe de pivotement (40, 140) et le centre de traînée (A) et/ou de la distance séparant l'axe de pivotement (40, 140) et le point d'articulation (C, C', C'') à la position de traînée de la pale, et en ce que d'autre part, l'un (39, 139) des organes du dispositif d'amortissement (3, 103), associé à ladite pale, est monté sur le moyeu et articulé en pivotement par rapport à au moins un axe (61) de celui-ci, l'autre (38, 138) desdits organes étant monté ou articulé sur ladite pale ou sa pièce d'attache (2, 102) et entraînant le premier desdits organes en battement autour dudit axe lors desdits mouvements de battements de ladite pale.

2. Tête de rotor selon la revendication 1, caractérisée en ce que la chaîne cinématique, qui relie les organes (38, 39 ; 138, 139) du dispositif d'amortissement (3, 103), d'une part au moyeu (1, 101) et d'autre part à la pale ou sa pièce d'attache (2, 102) comporte au moins une liaison à rotule (56, 213) et une liaison pivot (61 ; 218, 219) autour d'un axe non parallèle à l'axe de pivotement (40, 140) relatif desdits organes (38, 39 ; 138, 139).

3. Tête de rotor selon la revendication 2, caractérisée en ce que l'un (38, 139) des organes (38, 39 ; 138, 139) d'un dispositif d'amortissement (3, 103) est relié à l'un (2, 101) des éléments de l'ensemble constitué par un moyeu (1, 101) et une pale ou sa pièce d'attache (2, 102) par l'intermédiaire d'une pièce de liaison (46, 209) articulée sur ledit organe ou ledit élément par l'intermédiaire d'une liaison à rotule (56, 213).

4. Tête de rotor selon la revendication 3, caractérisée en ce que la pièce de liaison (46, 209) est apte à se translater par rapport au centre (C, C', C'') de la liaison à rotule.

5. Tête de rotor selon la revendication 4, caractérisée en ce que la pièce de liaison (46, 209) est munie d'une tige d'extrémité (55, 212) montée dans un alésage complémentaire traversant une rotule (56, 213) apte à pivoter autour de son centre (C, C', C'') fixe par rapport à l'élément ou l'organe sur lequel ladite rotule est montée, ladite tige (52, 212) étant apte à coulisser dans son alésage complémentaire.

6. Tête de rotor selon l'une des revendications 4 ou 5, caractérisée en ce que le centre (C, C', C'') de la liaison à rotule (56, 213) est fixe par rapport à la pale ou sa pièce d'attache (2, 102).

7. Tête de rotor selon les revendications 5 et 6 prises en combinaison, caractérisée en ce que une pale et sa pièce d'attache (2) sont deux pièces distinctes, ladite pale étant solidarisée de ladite pièce d'attache par emboîtement de son pied dans une chape d'extrémité (17) dont est munie ladite pièce d'attache (2), le fond (23) de ladite chape (17) recevant la rotule (56) sur laquelle est articulée la pièce de liaison (46), ladite rotule (56) étant apte à pivoter autour de son centre sensiblement fixe par rapport audit fond (23).

8. Tête de rotor selon l'une quelconque des revendications 2 à 7, caractérisée en ce que l'un (38) des organes du dispositif d'amortissement (3) est articulé par une liaison à rotule (56) sur l'élément (2) sur lequel il est monté, l'autre (39) desdits organes étant articulé sur l'élément (1) sur lequel il est monté, par l'intermédiaire d'une liaison de pivotement (61) autour d'un axe fixe par rapport audit élément (1).

9. Tête de rotor selon la revendication 8, caractérisée en ce que l'axe (61) de ladite liaison de pivotement est perpendiculaire à l'axe (40) de pivotement relatif desdits organes (38, 39).

10. Tête de rotor selon l'une des revendications 8 ou 9, caractérisée en ce que l'un (39) des organes du dispositif d'amortissement est articulé par une liaison à pivot sur le corps de moyeu (1), l'autre (38) desdits organes étant articulé par une liaison à rotule (56) sur la pale ou la pièce d'attache (2) associée à ladite pale.

11. Tête de rotor selon l'une quelconque des revendications 2 à 7, caractérisée en ce que l'un (138) des organes d'un dispositif d'amortissement (103) est fixe par rapport à l'un des éléments de l'ensemble que constituent le moyeu et la pale ou sa pièce d'attache, l'autre (139) desdits organes étant articulé sur l'autre (101) desdits éléments par l'intermédiaire d'au moins une liaison à rotule (213).

12. Tête de rotor selon la revendication 11 prise en combinaison avec l'une des revendications 3 à 7, caractérisée en ce que l'articulation du second (139) desdits organes sur le second (101) desdits éléments est réalisée par l'intermédiaire d'une pièce de liaison (209) articulée sur l'un dudit organe (139) et dudit élément (101) par l'intermédiaire d'une liaison à rotule (213) et sur l'autre dudit organe ou dudit élément par l'intermédiaire d'une liaison-pivot.

13. Tête de rotor selon la revendication 12, caractérisée en ce que ladite pièce de liaison est un étrier (209) articulé, d'une part, par ses branches (210) en pivotement autour d'un axe (211) fixe par rapport à l'un (139) des organes du dispositif d'amortissement et, d'autre part, sur le moyeu (101) par l'intermédiaire d'une liaison à rotule.

14. Tête de rotor selon la revendication 13, caractérisée en ce que l'étrier (209) est muni, sensiblement sur sa partie centrale, d'une tige (212) emboîtée dans un alésage complémentaire dont est muni une rotule (213) apte à pivoter autour de son centre fixe par rapport au moyeu (101), ladite tige (212) étant apte à coulisser dans ledit alésage.

15. Tête de rotor selon l'une des revendications 13 ou 14, caractérisée en ce que l'étrier (209) est associé à des moyens permettant un léger déboîtement de ses branches par rapport à leur axe de pivotement (211) sur celui des organes du dispositif d'amortissement, sur lequel elles sont articulées, pour accompagner les mouvements de pas de la pale et, éventuellement, de sa pièce d'attache (202).

16. Tête de rotor selon la revendication 15, caractérisée en ce que lesdits moyens comprennent des liaisons rotulaires entre les branches (210) dudit étrier (209) et l'axe (211) de ladite liaison-pivot.

17. Tête de rotor selon l'une quelconque des revendications précédentes, caractérisée en ce que chaque pale est accouplée au moyeu (1, 101) par l'intermédiaire d'une pièce d'attache (2, 102) à extrémité fourchue, l'unique butée lamifiée sphérique (13, 113) étant montée entre une armature radiale externe (12, 112) solidaire du moyeu et une armature radiale interne (14, 114) disposée en entretoise entre les branches d'extrémité radiale interne de ladite pièce d'attache (2, 102).

18. Tête de rotor selon la revendication 17, caractérisée en ce que l'armature externe (12, 112) est montée et est solidaire en appui sur une ceinture de renforcement (7, 107) entourant le corps du moyeu.

19. Tête de rotor selon la revendication 18, caractérisée en ce que la ceinture de renforcement (7, 107) a une section droite en forme de U, dont les branches s'étendent du fond de ladite ceinture de renforcement (7, 107) sensiblement radialement vers l'extérieur du corps (4, 104) du moyeu.

20. Tête de rotor selon l'une des revendications 18 ou 19, caractérisée en ce qu'une ceinture de renforcement (7, 107) a un contour polygonal à sommets arrondis et à petits côtés (8, 108) égaux alternant avec des grands côtés (9, 109) égaux, les petits côtés (8, 108) portant des armatures externes (12, 112) des butées lamifiées sphériques (13, 113) associées aux pales.

21. Tête de rotor selon les revendications 19 et 20 prises en combinaison, caractérisée en ce qu'une armature externe (12, 112) est également de section droite sensiblement en forme de U avec des branches dirigées radialement vers l'extérieur, encastrée sur un petit côté (8, 108) de la ceinture de renforcement (7, 107), et est associée à un capot (64, 215) solidarisé des branches (11, 111) de ladite armature externe (10, 110) et obturant la partie ouverte de ladite armature externe et dudit petit côté (8, 108) de section droite en forme de U de la ceinture.

22. Tête de rotor selon la revendication 21 prise en combinaison avec l'une des revendications 8 à 10, caractérisée en ce que un capot (64) porte, par l'intermédiaire de deux oreilles (63a, 63b) dont il est muni, un arbre (61) sur lequel est articulé en pivotement autour de l'axe dudit arbre, l'un (39) des organes du dispositif d'amortissement.

23. Tête de rotor selon la revendication 21 prise en combinaison avec l'une des revendications 11 à 16, caractérisée en ce que le capot (215) est muni d'un évidement recevant une rotule (213) apte à pivoter à l'intérieur dudit évidement autour de son centre fixe par rapport au capot (215).

24. Tête de rotor selon l'une quelconque des revendications précédentes, caractérisée en ce que le dispositif d'amortissement (3, 103) associé à une pale est monté à l'intérieur de la pièce d'attache (2, 102) de ladite pale.

25. Tête de rotor selon l'une quelconque des revendications précédentes, caractérisée en ce que l'un (39, 139) des organes du dispositif d'amortissement est un organe stator dont les parois intérieures délimitent une enveloppe (37, 137) à forme principale de révolution, l'autre desdits organes étant un organe rotor (38, 138) apte à pivoter coaxialement dans ladite enveloppe (37, 137).

26. Tête de rotor selon la revendication 25, caractérisée en ce que l'organe stator (39, 139) est articulé ou monté sur le moyeu, l'organe rotor (38, 138) étant articulé ou monté sur la pale ou sa pièce d'attache (2, 102).

27. Tête de rotor selon la revendication 26, caractérisée en ce que les mouvements de pivotement relatif des organes (38, 39 ; 138, 139) stator et rotor sont amortis hydroélastiquement, l'enveloppe (37, 137) de l'organe stator (39, 139) et les parois de l'organe rotor (38, 138) en regard de ladite enveloppe délimitant ensemble, avec des faces extrêmes (57a, 57b ; 22, 222) entre lesquelles ladite enveloppe (37, 137) et lesdites parois sont montées, une chambre principale remplie de fluide, ladite enveloppe (37, 137) et lesdites parois en regard étant munies de palettes aux ailettes divisant ladite chambre principale en une pluralité de volumes, lesdites palettes étant associées à des moyens de laminage (44, 234) dudit fluide à travers les différents volumes de ladite chambre principale, ladite chambre principale étant en communication avec au moins une chambre auxiliaire à volume variable (73) destinée notamment à compenser les dilatations du fluide.

28. Tête de rotor selon la revendication 27, caractérisée en ce que les moyens de laminage comprennent au moins un orifice de laminage (44, 234) traversant une palette (42, 142) dans son épaisseur, ladite palette (42, 142) étant comprise entre deux palettes (41, 141) sans orifices associées à celui (39, 139) des deux organes rotor et stator qui ne porte pas ladite première palette.

29. Tête de rotor selon la revendication 27, caractérisée en ce qu'un orifice de laminage (44, 334) est associé à une lamelle (45, 235) ressort qui sert de clapet d'écrêtage, l'obture dans sa position de repos et autorise le passage du fluide dans ledit orifice audessus d'un seuil prédéterminé de pression différentielle entre les deux compartiments que ladite palette délimite dans la chambre principale.

30. Tête de rotor selon l'une des revendications 28 ou 29, caractérisée en ce qu'une palette (42) est traversée par deux orifices (44) dont les axes sont répartis sensiblement sur une de ses hauteurs.

31. Tête de rotor selon l'une des revendications 28 à 30, caractérisée en ce que chacune des palettes (42, 142) associée à l'organe rotor (38, 138) est traversée par au moins un orifice de laminage (44, 234) permettant la communication entre les deux compartiments qu'elle délimite dans la chambre principale.

32. Tête de rotor selon l'une des revendications 27 à 31, caractérisée en ce que les faces extrêmes délimitant la chambre principale et entre lesquelles l'enveloppe (37, 137) de l'organe stator (39, 139) et les parois de l'organe rotor (38, 138) en regard sont montées, sont les faces de couronnes annulaires (57a, 57b ; 221, 222) solidarisées des parois délimitant ladite enveloppe (37, 137), les palettes de l'organe rotor (38, 138) se déplaçant entre lesdites couronnes (57a, 57b ; 221, 222).

33. Tête de rotor selon la revendication 32, caractérisée en ce que la communication entre la chambre auxiliaire et la chambre principale est obtenue par circulation du fluide entre le bord annulaire intérieur d'au moins l'une desdites couronnes (57a, 57b ; 221, 222) et la portion de paroi externe de l'organe rotor qui lui fait face.

34. Tête de rotor selon l'une quelconque des revendications 27 à 33, caractérisée en ce que une chambre auxiliaire (73) est disposée à l'intérieur de l'organe rotor (38).

35. Tête de rotor selon la revendication 34, caractérisée en ce que la chambre auxiliaire (73) est délimitée en partie par une membrane à déroulement (72) montée sur un piston (70) repoussé par un ressort (71) en compression pour adapter le volume de ladite chambre auxiliaire (73) aux variations éventuelles des volumes de fluide et maintenir l'amortisseur rotatif hydraulique sous une pression suffisante en charge statique.

36. Tête de rotor selon la revendication 35, caractérisée en ce qu'une membrane à déroulement (72) est montée dans un évidement (47) ayant une forme principale cylindrique coaxiale aux organes stator et rotor (38, 39), obturé de manière étanche à l'une des ses extrémités et à l'autre extrémité duquel est monté coaxialement ledit piston (70).

37. Tête de rotor selon l'une quelconque des revendications 27 à 36, caractérisée en ce qu'une palette (42) est constituée par deux ailettes (43) côte-à-côte, chacune traversée par deux orifices de laminage (44), les orifices des ailettes (43) d'une même palette (42) étant regard les uns des autres, l'un des orifices d'une ailette (43) étant associe à une lamelle-ressort (45), et étant en regard d'un orifice non obturé de manière sélective par une lamelle-ressort.

38. Tête de rotor selon la revendication 37, caractérisée en ce que les palettes (42) de l'organe rotor (38) comportent chacune deux ailettes (43) côte-à-côte.

39. Tête de rotor selon l'une des revendications 37 ou 38, caracterisée en ce que les lamelles ressort (43) associées à une même palette (42) sont disposées à l'intérieur de l'évidement délimité par les deux ailettes (43) réalisant ladite palette (42), décalées en hauteur les unes par rapport aux autres.

40. Tête de rotor selon l'une quelconque des revendications 32 ou 33, caractérisée en ce que la chambre auxiliaire est délimitée au moins partiellement par les surfaces extérieures des couronnes (221, 222) délimitant les faces extrêmes de la chambre principale et au moins partiellement par une membane (226, 227) élastiquement déformable.

41. Tête de rotor selon la revendication 39, caractérisée en ce que chaque couronne annulaire (221, 222) est associée à une membrane (226, 227) élastiquement déformable, le dispositif d'amortissement étant muni d'une chambre auxiliaire vers chacune de ses extrémités dans la hauteur des organes stator et rotor.

42. Tête de rotor selon l'une des revendications 40 ou 41, caractérisée en ce qu'une membrane (226, 227) élastiquement déformable a une forme annulaire.

43. Tête de rotor selon la revendication 42, caractérisée en ce que le bord annulaire externe d'une membrane annulaire élastiquement déformable (226, 227) est entouré d'une bague extérieure à laquelle ladite membrane est solidarisée par vulcanisation et qui est solidarisée de façon étanche à l'organe stator (139).

44. Tête de rotor selon l'une quelconque des revendications 25 à 43, caractérisée en ce que l'organe rotor (38, 138) est monté entre les deux branches d'une chape (46 ; 206a, 206b) le reliant à la pale ou à la pièce d'attache (2, 102) de ladite pale.

45. Tête de rotor selon la revendication 44, prise en combinaison avec l'une des revendications 4 à 8, caractérisée en ce que les branches (206a, 206b) de ladite chape sont d'une pièce avec la pièce d'attache (102).

46. Tête de rotor selon la revendication 44 prise en combinaison avec l'une des revendications 11 à 16, caractérisée en ce que ladite chape est la pièce de liaison (46).

## Patentansprüche

1. Rotorkopf für ein Drehflügelflugzeug mit einer Nabe, an die jedes Rotorblatt möglicherweise über ein Befestigungsteil (2, 102) durch einen kugelförmigen laminierten Anschlag (13, 113) angekoppelt ist, der die Schlagwinkelbewegungen und die Steigungsorientierung des Blattes sowie insbesondere seine abwechselnden Schwenkbewegungen um ein gemeinsames Zentrum (A) zuläßt, das sich mit den Blättern des Rotors um die Achse des Rotors dreht und bezüglich des Körpers des Nabe fest liegt, wobei das Blatt auch einer Vorrichtung (3, 103) zur Dämpfung der Schwenkbewegungen zugeordnet ist, die zwischen dem Blatt und der Nabe (1, 101) angebracht und vom Typ mit zwei Organen (38, 39; 138, 139) ist, die relativ um eine gemeinsame Achse (40, 140) schwenken können, wobei die Relativbewegungen der Organe hydro- und/oder viskoelastisch gedämpft werden, dadurch gekennzeichnet, daß einerseits eines (39, 138) der Organe an einem (1, 102) der beiden Elemente angebracht ist, die das Blatt oder sein Befestigungsteil (2, 102) und die Nabe (1, 101) bilden, um es bei seinen möglichen Schwenkbewegungen zu begleiten, wobei das andere (38, 139) der Organe bezüglich eines Gelenkpunktes (C, C', C'') an dem anderen (2, 101) der Elemente angelenkt ist, um bezüglich der den Gelenkpunkt (C, C', C'') mit der Relativschwenkachse (40, 140) der Organe (38, 39; 138, 139) verbindenden Geraden eine konstante Schwenkwinkelorientierung zu bewahren, wobei sich wenigstens eines der Organe (38, 39; 138, 139) bezüglich des Elements, an dem es angelenkt ist, so verschieben kann, daß eine Anpassung des Abstandes zwischen der Schwenkachse (40, 140) und dem Schwenkzentrum (A) und/oder des Abstandes, zwischen der Schwenkachse (40, 140) und dem Gelenkpunkt (C, C', C'') an die Schwenkposition des Blattes ermöglicht wird, und daß andererseits eines (39, 139) der Organe der Dämpfungseinrichtung (3, 103), das dem Blatt zugeordnet ist, an der Nabe angebracht und wenigstens bezüglich einer Achse (61) davon schwenkbar angelenkt ist, wobei das andere (38, 138) der Organe an dem Blatt oder seinem Befestigungsteil (2, 102) angelenkt ist und das erste der Organe bei den Schlagbewegungen des Blattes in Schlagbewegung um die Achse mitnimmt.

2. Rotorkopf nach Anspruch 1, dadurch gekennzeichnet, daß die kinematische Kette, die die Organe (38, 39; 138, 139) der Dämpfungseinrichtung (3, 103) einerseits mit der Nabe (1, 101) und andererseits mit dem Blatt oder seinem Befestigungsteil (2, 102) verbindet, wenigstens eine Kugelgelenkverbindung (56, 213) und eine Schwenkverbindung (61; 218, 219) um eine Achse aufweist, die nicht parallel zu der Relativschwenkachse (40, 140) der Organe (38, 39, 138, 139) liegt.

3. Rotorkopf nach Anspruch 2, dadurch gekennzeichnet, daß eines (38, 139) der Organe (38, 39; 138, 139) einer Dämpfungseinrichtung (3, 103) über ein Verbindungsteil (46, 209), das über eine Kugelgelenkverbindung (56, 213) an dem Organ oder dem Element angelenkt ist, mit einem (2, 101) der Elemente der durch eine Nabe (1, 101) und ein Blatt oder sein Befestigungsteil (2, 102) gebildeten Einheit verbunden ist.

4. Rotorkopf nach Anspruch 3, dadurch gekennzeichnet, daß sich das Verbindungsteil (46, 209) bezüglich des Zentrums (C, C', C'') der Kugelgelenkverbindung verschieben kann.

5. Rotorkopf nach Anspruch 4, dadurch gekennzeichnet, daß das Verbindungsteil (46, 209) mit einem Endstift (55, 212) versehen ist, der in einer komplementären Bohrung angebracht ist, die ein Kugelgelenk (56, 213) durchsetzt, das um sein Zentrum (C, C', C'') schwenken kann, das bezüglich des Elements oder des Organs festliegt, an dem das Kugelgelenk angebracht ist, wobei der Stift (52, 212) in seiner komplementären Bohrung gleiten kann.

6. Rotorkopf nach einem der Ansprüche 4 oder 5, dadurch gekennzeichnet, daß das Zentrum (C, C', C'') der Kugelgelenkverbindung (56, 213) bezüglich des Blattes oder seines Befestigungsteils (2, 102) festliegt.

7. Rotorkopf nach Anspruch 5 und 6 in Kombination, dadurch gekennzeichnet, daß ein Blatt und sein Befestigungsteil (2) zwei getrennte Teile sind, wobei das Blatt dadurch mit dem Befestigungsteil fest verbunden ist, daß sein Fuß in eine Endgabel (17) eingesetzt ist, mit der das Befestigungsteil (2) versehen ist, wobei der Boden (23) der Gabel (17) das Kugelgelenk (56) aufnimmt, an dem das Verbindungsstück (46) angelenkt ist, wobei das Kugelgelenk (56) um sein bezüglich des Bodens (23) im wesentlichen festes Zentrum schwenken kann.

8. Rotorkopf nach einem der Ansprüche 2 bis 7, dadurch gekennzeichnet, daß eines (38) der Organe der Dämpfungseinrichtung (3) durch eine Kugelgelenkverbindung (56) an dem Element (2) angelenkt ist, an dem es angebracht ist, wobei das andere (39) der Organe an dem Element (1), an dem es angebracht ist, über eine Verbindung (61) zum Schwenken um eine bezüglich des Elements (1) feste Achse angelenkt ist.

9. Rotorkopf nach Anspruch 8, dadurch gekennzeichnet, daß die Achse (61) der Schwenkverbindung senkrecht zu der relativen Schwenkachse (40) der Organe (38, 39) liegt.

10. Rotorkopf nach einem der Ansprüche 8 oder 9, dadurch gekennzeichnet, daß eines (39) der Organe der Dämpfungseinrichtung durch eine Schwenkverbindung an dem Nabenkörper (1) angelenkt ist, wobei das andere (38) der Organe durch eine Kugelgelenkverbindung (56) an dem Blatt oder dem dem Blatt zugeordneten Befestigungsteil (2) angelenkt ist.

11. Rotorkopf nach einem der Ansprüche 2 bis 7, dadurch gekennzeichnet, daß eines (138) der Organe einer Dämpfungseinrichtung (103) bezüglich eines der Elemente der Einheit festliegt, die die Nabe und das Blatt oder das Befestigungsteil bilden, wobei das andere (139) der Organe über wenigstens eine Kugelgelenkverbindung (213) an dem anderen (101) der Elemente angelenkt ist.

12. Rotorkopf nach Anspruch 11 in Kombination mit einem der Ansprüche 3 bis 7, dadurch gekennzeichnet, daß die Anlenkung des zweiten (139) der Organe an dem zweiten (101) der Elemente über ein Verbindungsteil (209) realisiert ist, das über eine Kugelgelenkverbindung (213) an einem der beiden Teile Organ (139) und Element (101) und über eine Schwenkverbindung an dem anderen der beiden Teile Organ und Element angelenkt ist.

13. Rotorkopf nach Anspruch 12, dadurch gekennzeichnet, daß das Verbindungsteil ein Bügel (209) ist, der einerseits durch seine Schenkel (210) schwenkbar um eine bezüglich eines (139) der Organe der Dämpfungseinrichtung feste Achse (211) und andererseits über eine Kugelgelenkverbindung an der Nabe (101) angelenkt ist.

14. Rotorkopf nach Anspruch 13, dadurch gekennzeichnet, daß der Bügel (209) im wesentlichen an seinem zentralen Teil mit einem Stift (212) versehen ist, der in eine komplementäre Bohrung eingesetzt ist, mit der ein Kugelgelenk (213) versehen ist, das um sein bezüglich der Nabe (101) festes Zentrum schwenken kann, wobei der Stift (212) in der Bohrung gleiten kann.

15. Rotorkopf nach einem der Ansprüche 13 oder 14, dadurch gekennzeichnet, daß der Bügel (209) Mitteln zugeordnet ist, die ein leichtes Ausschesen seiner Schenkel bezüglich ihrer Schwenkachse (211) zu demjenigen der Organe der Dämpfungseinrichtung ermöglichen, an dem sie angelenkt sind, um die Steigungsbewegungen des Blattes und möglicherweise seines Befestigungsteils (202) zu begleiten.

16. Rotorkopf nach Anspruch 15, dadurch gekennzeichnet, daß die Mittel Kugelgelenkverbindungen zwischen den Schenkeln (210) des Bügels (209) und der Achse (211) der Schwenkverbindung aufweisen.

17. Rotorkopf nach einem der vorhergehenden Ansprüche, dadurch gekennzeichnet, daß jedes Blatt über ein Befestigungsteil (2, 102) mit gegabeltem Ende an die Nabe (1, 101) angekoppelt ist, wobei der einzige kugelförmige und laminierte Anschlag (13, 113) zwischen einem mit der Nabe fest verbundenem radial äußeren Beschlag (12, 112) und einem radial inneren Beschlag (14, 114) angebracht ist, der als Strebe zwischen den radial inneren Endschenkeln des Befestigungsteils (2, 102) angeordnet ist.

18. Rotorkopf nach Anspruch 17, dadurch gekennzeichnet, daß der äußere Beschlag (12, 112) in Anlage an einem Verstärkungsreif (7, 107) angebracht und damit fest verbunden ist, der den Nabenkörper umgibt.

19. Rotorkopf nach Anspruch 18, dadurch gekennzeichnet, daß der Verstärkungsreif (7, 107) einen U-förmigen Querschnitt aufweist, dessen Schenkel sich vom Boden des Verstärkungsreifs (7, 107) im wesentlichen radial nach außerhalb des Körpers (4, 104) der Nabe erstrecken.

20. Rotorkopf nach einem der Ansprüche 18 oder 19, dadurch gekennzeichnet, daß ein Verstärkungsring (7, 107) einen polygonalen Umfang mit abgerundeten Spitzen und gleichen kurzen Seiten (8, 108) aufweist, die sich mit gleichen langen Seiten (9, 109) abwechseln, wobei die kurzen Seiten (8, 108) äußere Beschläge (12, 112) der kugelförmigen, laminierten Anschläge (13, 113) tragen, die den Blättern zugeordnet sind.

21. Rotorkopf nach den Ansprüchen 19 und 20 in Kombination, dadurch gekennzeichnet, daß ein äußerer Beschlag (12, 112) ebenfalls im wesentlichen einen U-förmigen Querschnitt mit radial nach außen gerichteten Schenkeln aufweist, an einer kurzen Seite (8, 108) des Verstärkungsreifs (7, 107) eingesetzt und einer Haube (64, 215) zugeordnet ist, die mit den Schenkeln (11, 111) des äußeren Beschlags (10, 110) fest verbunden ist und den offenen Teil des äußeren Beschlags und der kurzen Seite (8, 108) mit U-förmigem Querschnitt des Reifs verschließt .

22. Rotorkopf nach Anspruch 21 in Kombination mit einem der Ansprüche 8 bis 10, dadurch gekennzeichnet, daß eine Haube (64) über zwei Laschen (63a, 63b), mit denen sie versehen ist, einen Schaft (61) trägt, an dem um die Achse des Schaftes eines (39) der Organe der Dämpfungseinrichtung schwenkbar angelenkt ist.

23. Rotorkopf nach Anspruch 21 in Kombination mit einem der Ansprüche 11 bis 16, dadurch gekennzeichnet, daß die Haube (215) mit einer ein Kugelgelenk (213) aufnehmenden Ausnehmung versehen ist, das im Inneren der Ausnehmung um sein bezüglich der Haube (215) festes Zentrum schwenken kann.

24. Rotorkopf nach einem der vorhergehenden Ansprüche, dadurch gekennzeichnet, daß die einem Blatt zugeordnete Dämpfungseinrichtung (3, 103) im Inneren des Befestigungsteils (2, 102) für das Blatt angebracht ist.

25. Rotorkopf nach einem der vorhergehenden Ansprüche, dadurch gekennzeichnet, daß eines (39, 139) der Organe der Dämpfungseinrichtung ein Statororgan ist, dessen Innenwände einen Mantel (37, 137) mit einer Rotationshauptform begrenzen, wobei das andere der Organe ein Rotororgan (38, 138) ist, das koaxial in dem Mantel (37, 137) schwenken kann.

26. Rotorkopf nach Anspruch 25, dadurch gekennzeichnet, daß das Statororgan (39, 139) an der Nabe angelenkt oder angebracht ist, wobei das Rotororgan an dem Blatt oder seinem Befestigungsteil (2, 102) angelenkt oder angebracht ist.

27. Rotorkopf nach Anspruch 26, dadurch gekennzeichnet, daß die Relativschwenkbewegungen des Stator- und des Rotororgans (38, 39 bzw. 138, 139) hydroelastisch gedämpft werden, wobei der Mantel (37, 137) des Statororgans (39, 139) und die Wände des Rotororgans (38, 138) gegenüber dem Mantel gemeinsam mit Endflächen (57a, 57b; 22, 222), zwischen denen der Mantel (37, 137) und die Wände angebracht sind, eine mit Fluid gefüllte Hauptkammer begrenzen, wobei der Mantel (37, 137) und die gegenüberliegenden Wände mit Flügelschaufeln versehen sind, die die Hauptkammer in mehrere Volumina unterteilen, wobei die Schaufeln Glättungsmitteln (44, 234) für das Fluid durch die verschiedenen Volumina der Hauptkammer zugeordnet sind, wobei die Hauptkammer mit wenigstens einer Hilfskammer (73) mit variablem Volumen in Verbindung steht, die insbesondere zum Ausgleich der Fluidausdehnungen bestimmt ist.

28. Rotorkopf nach Anspruch 27, dadurch gekennzeichnet, daß die Glättungsmittel wenigstens eine Glättungsöffnung (44, 234) aufweisen, die eine Schaufel (42, 142) in ihrer Dicke durchsetzt, wobei die Schaufel (42, 142) zwischen zwei Schaufeln (41, 141) ohne Öffnungen liegt, die demjenigen (39, 139) der beiden Rotor- und Statororgane zugeordnet sind, das nicht die erste Schaufel hält.

29. Rotorkopf nach Anspruch 27, dadurch gekennzeichnet, daß eine Glättungsöffnung (44, 334) einer Federlamelle (45, 235) zugeordnet ist, die als Begrenzungsventil dient, sie in der Ruhestellung verschließt und den Durchgang von Fluid in die Öffnung überhalb eines vorbestimmten Differenzdruckschwellenwerts zwischen den zwei Abteilen zuläßt, die die Schaufel in des Hauptkammer abgrenzt.

30. Rotorkopf nach einem der Ansprüche 28 oder 29, dadurch gekennzeichnet, daß eine Schaufel (42) von zwei Öffnungen (44) durchsetzt ist, deren Achsen im wesentlichen an einer ihrer Höhen verteilt sind.

31. Rotorkopf nach einem der Ansprüche 28 bis 30, dadurch gekennzeichnet, daß jede der dem Rotororgan (38, 138) zugeordneten Schaufeln (42, 142) von wenigstens einer Glättungsöffnung (44, 234) durchsetzt ist, die die Verbindung zwischen den zwei Abteilen zuläßt, die sie in der Hauptkammer abgrenzt.

32. Rotorkopf nach einem der Ansprüche 27 bis 31, dadurch gekennzeichnet, daß die die Hauptkammer begrenzenden äußersten Seiten, zwischen denen der Mantel (37, 137) des Statororgans (39, 139) und die Wände des gegenüberliegenden Rotororgans (38, 138) angebracht sind, die Seiten von ringförmigen Kränzen (57a, 57b; 221, 222) sind, die mit den den Mantel (37, 137) begrenzenden Wänden fest verbunden sind, wobei sich die Schaufeln des Rotororgans (38, 138) zwischen den Kränzen (57a, 57b; 221, 222) verschieben.

33. Rotorkopf nach Anspruch 32, dadurch gekennzeichnet, daß die Verbindung zwischen der Hilfs- und der Hauptkammer durch die Umwälzung von Fluid zwischen dem inneren ringförmigen Rand wenigstens eines der Kränze (57a, 57b; 221, 222) und dem ihm zugewandten Abschnitt der Außenwand des Rotororgans erhalten wird.

34. Rotorkopf nach einem der Ansprüche 27 bis 33, dadurch gekennzeichnet, daß eine Hilfskammer (73) im Inneren des Rotororgans (38) angeordnet ist.

35. Rotorkopf nach Anspruch 34, dadurch gekennzeichent, daß die Hilfskammer (73) teilweise durch eine Abwicklungsmembran (72) begrenzt ist, die an einem Kolben (70) angebracht ist, der durch eine Druckfeder (71) zurückgedrückt wird, um das Volumen der Hilfskammer (73) den möglichen Schwankungen der Fluidvolumina anzupassen und den hydraulischen Drehdämpfer bei ruhender Belastung unter ausreichendem Druck zu halten.

36. Rotorkopf nach Anspruch 35, dadurch gekennzeichnet, daß eine Abwicklungsmembran (72) in einer Ausnehmung (47) angebracht ist, die eine zu dem Stator- und dem Rotororgan (38, 39) koaxiale, zylindrische Hauptform aufweist und an einem ihrer Enden dicht verschlossen ist, wobei am anderen Ende der Kolben (70) koaxial angebracht ist.

37. Rotorkopf nach einem der Ansprüche 27 bis 36, dadurch gekennzeichnet, daß eine Schaufel (42) durch zwei Seite an Seite liegende Flügel (43) gebildet ist, die jeweils von zwei Glättungsöffnungen (44) durchsetzt sind, wobei die Öffnungen der Flügel (43) ein und derselben Schaufel (42) einander gegenüberliegen, wobei eine der Öffnungen eines Flügels (43) einer Federlamelle (45) zugeordnet ist und sich durch eine Federlamelle selektiv gegenüber einer nicht verschlossenen Öffnung befindet.

38. Rotorkopf nach Anspruch 37, dadurch gekennzeichnet, daß die Schaufeln (42) des Rotororgans (38) jeweils zwei Seite an Seite liegende Flügel (43) aufweist.

39. Rotorkopf nach einem der Ansprüche 37 oder 38, dadurch gekennzeichnet, daß die ein und derselben Schaufel (42) zugeordneten Federlamellen (43) im Inneren der Ausnehmung, die durch die die Schaufel (42) bildenden zwei Flügel (43) begrenzt ist, angeordnet und zueinander in der Höhe versetzt sind.

40. Rotorkopf nach einem der Ansprüche 32 oder 33, dadurh gekennzeichnet, daß die Hilfskammer wenigstens teilweise durch die Außenflächen der die äußersten Seiten der Hauptkammer begrenzenden Kränze (221, 222) und wenigstens teilweise durch eine elastisch verformbare Membran (226, 227) begrenzt ist.

41. Rotorkopf nach Anspruch 39, dadurch gekennzeichnet, daß jeder ringförmige Kranz (221, 222) einer elastisch verformbaren Membran (226, 227) zugeordnet ist, wobei die Dämpfungseinrichtung etwa an jedem ihrer Enden mit einer Hilfskammer auf Höhe der Stator- und Rotororgane versehen ist.

42. Rotorkopf nach einem der Ansprüche 40 oder 41, dadurch gekennzeichnet, daß eine elastisch verformbare Membran (226, 227) eine ringförmige Gestalt aufweist.

43. Rotorkopf nach Anspruch 42, dadurch gekennzeichnet, daß der äußere ringförmige Rand einer elastisch verformbaren, ringförmigen Membran (226, 227) von einem Außenring umgeben ist, mit dem die Membran durch Vulkanisierung fest verbunden ist, und der dicht und fest mit dem Statororgan (139) verbunden ist.

44. Rotorkopf nach einem der Ansprüche 25 bis 43, dadurch gekennzeichnet, daß das Rotororgan (38, 138) zwischen den beiden Schenkeln einer Gabel (46; 206a, 206b) angebracht ist, die es mit dem Blatt oder dem Befestigungsteil (2, 102) für das Blatt verbinden.

45. Rotorkopf nach Anspruch 44 in Kombination mit einem der Ansprüche 4 bis 8, dadurch gekennzeichnet, daß die Schenkel (206a, 206b) der Gabel aus einem Stück mit dem Befestigungsteil (102) gebildet sind.

46. Rotorkopf nach Anspruch 44 in Kombination mit einem der Ansprüche 11 bis 16, dadurch gekennzeichnet, daß die Gabel das Verbindungsteil (46) ist.

## Claims

1. A rotor head for rotary wing aircraft, comprising a hub to which each rotor blade is coupled, possibly by the intermediary of an attachment piece (2, 102), by means of a laminar spherical thrust bearing (13, 113) allowing the angular oscillations of flapping and the orientation in pitch of said blade as well as, in particular, its alternating angular movements of drag about a common center (A) rotating with the blades of the rotor about the axis of said rotor and fixed with respect to the body of the hub, said blade also being associated with a device (3, 103) for damping said movements of drag mounted between said blade and said hub (1, 101) and of the type comprising two units (38, 39 ; 138, 139) capable of pivoting relatively about a common axis (40, 140), the relative movements of said units being damped hydro- and/or visco-elastically, characterized in that on the one hand, one (39, 138) of said units is mounted on one (1, 102) of the two elements which constitute said blade or its attachment piece (2, 102) and said hub (1, 101) in order to accompany it in its possible movements of drag, the other (38, 139) of said units being articulated with respect to an articulation point (C, C', C'') on the other (2, 101) of said elements in order to retain in drag a constant angular orientation with respect to the straight line joining said articulation point (C, C', C'') to the relative pivoting axis (40, 140) of said units (38, 39 ; 138, 139), one at least of said units (38, 39 ; 138, 139) being capable of a movement of translation with respect to the element onto which it is articulated so as to allow the adaptation of the distance separating the pivoting axis (40, 140) and the drag center (A) and/or of the distance separating the pivoting axis (40, 140) and the articulation point (C, C', C'') at the drag position of the blade, and in that, on the other hand, one (39, 139) of the units of the damping device (3, 103) associated with said blade is mounted on the hub and articulated in a pivoting manner with respect to at least one axis (61) of the latter, the other (38, 138) of said units being mounted or articulated on said blade or its attachment piece (2, 102) and driving the first of said units in a flapping manner about said axis during said flapping movements of said blade.

2. The rotor head according to Claim 1, characterized in that the kinematic chain, which connects the units (38, 39 ; 138, 139) of the damping device (3, 103), on the one hand, to the hub (1, 101) and, on the other hand, to the blade or its attachment piece (2, 102), comprises at least one ball joint (56, 213) and one pivot joint (61 ; 218, 219) about an axis which is not parallel to the relative pivoting axis (40, 140) of said units (38, 39 ; 138, 139).

3. The rotor head according to Claim 2, characterized in that one (38, 139) of the units (38, 39 ; 138, 139) of a damping device (3, 103) is connected to one (2, 101) of the elements of the assembly constituted by a hub (1, 101) and a blade or its attachment piece (2, 102) by the intermediary of a connecting piece (46, 209) articulated on said unit or said element by the intermediary of a ball joint (56, 213).

4. The rotor head according to Claim 3, characterized in that the connecting piece (46, 209) is capable of a movement of translation with respect to the center (C, C', C'') of the ball joint.

5. The rotor head according to Claim 4, characterized in that the connecting piece (46, 209) is provided with an end rod (55, 212) mounted in a complementary bore traversing a ball (56, 213) capable of pivoting about its center (C, C', C'') which is fixed with respect to the element or the unit on which said ball is mounted, said rod (52, 212) being capable of sliding in its complementary bore.

6. The rotor head according to one of Claims 4 or 5, characterized in that the center (C, C', C'') of the ball joint (56, 213) is fixed with respect to the blade or its attachment piece (2, 102).

7. The rotor head according to Claims 5 and 6, taken in combination, characterized in that a blade and its attachment piece (2) are two separate parts, said blade being integral with said attachment piece by the fitting of its foot into an end fork (17) with which said attachment piece (2) is provided, the base (23) of said fork (17) receiving the ball (56) on which the connecting piece (46) is articulated, said ball (56) being capable of pivoting about its center which is substantially fixed with respect to said base (23).

8. The rotor head according to any one of Claims 2 to 7, characterized in that one (38) of the units of the damping device (3) is articulated by a ball joint (56) on the element (2) on which it is mounted, the other (39) of said units being articulated on the element (1) on which it is mounted by the intermediary of a pivot joint (61) about an axis which is fixed with respect to said element (1).

9. The rotor head according to Claim 8, characterized in that the axis (61) of said pivot joint is perpendicular to the relative pivot axis (40) of said units (38, 39).

10. The rotor head according to one of Claims 8 or 9 characterized in that one (39) of the units of the damping device is articulated by a pivot joint on the hub body (1), the other (38) of said units being articulated by a ball joint (56) on the blade or the attachment piece (2) associated with said blade.

11. The rotor head according to any one of Claims 2 to 7, characterized in that one (138) of the units of a damping device (103) is fixed with respect to one of the elements of the assembly formed by the hub and the blade or its attachment piece, the other (139) of said units being articulated on the other (101) of said elements by the intermediary of at least one ball joint (213).

12. The rotor head according to Claim 11 taken in combination with one of Claims 3 to 7, characterized in that the articulation of the second (139) of said units on the second (101) of said elements is achieved by the intermediary of a connecting piece (209) articulated on one of said unit (139) and of said element (101) by the intermediary of a ball joint (213) and on the other of said unit or said element by the intermediary of a pivot joint.

13. The rotor head according to Claim 12, characterized in that said connecting piece is a stirrup (209) articulated, on the one hand, by its arms (210) in a pivoting manner about an axis (211) which is fixed with respect to one (139) of the units of the damping device and, on the other hand, on the hub (101) by the intermediary of a ball joint.

14. The rotor head according to Claim 13, characterized in that the stirrup (209) is provided, substantially in its central section, with a rod (212) fitted into a complementary bore provided in a ball joint (213) capable of pivoting about its center which is fixed with respect to the hub (101), said rod (212) being capable of sliding in said bore.

15. The rotor head according to one of Claims 13 or 14, characterized in that the stirrup (209) is associated with means allowing a slight offset of its arms with respect to their axis of pivoting (211) on that one of the units of the damping device on which they are articulated, in order to accompany the pitch movements of the blade and possibly of its attachment piece (202).

16. The rotor head according to Claim 15, characterized in that said means comprise ball joints between the arms (210) of said stirrup (209) and the axis (211) of said pivot joint.

17. The rotor head according to any one of the preceding claims, characterized in that each blade is coupled to the hub (1, 101) by the intermediary of an attachment piece (2, 102) having a forked end, the single laminated spherical thrust bearing (13, 113) being mounted between an outer radial brace (12, 112) integral with the hub and an inner radial brace (14, 114) disposed as a cross-piece between the inner radial end arms of said attachment piece (2, 102).

18. The rotor head according to Claim 17, characterized in that the outer brace (12, 112) is mounted and borne on a reinforcing belt (7, 107) surrounding the body of the hub.

19. The rotor head according to Claim 18, characterized in that the reinforcing belt (7, 107) has a U-shaped cross-section whose arms extend from the base of said reinforcing belt (7, 107) substantially radially towards the outside of the body (4, 104) of the hub.

20. The rotor head according to one of Claims 18 or 19, characterized in that a reinforcing belt (7, 107) has a polygonal contour with rounded points and having small equal sides (8, 108) alternating with large equal sides (9, 109), the small sides (8, 108) carrying outer braces (12, 112) of the laminated thrust bearings (13, 113) associated with the blades.

21. The rotor head according to Claims 19 and 20 taken in combination, characterized in that an outer brace (12, 112) also has a substantially U-shaped cross-section with arms directed radially towards the outside embedded into a small side (8, 108) of the reinforcing belt (7, 107) and is associated with a cover (64, 215) which is integral with the arms (11, 111) of said outer brace (10, 110) and closing the open section of said outer brace and of said small side (8, 108) of the U-shaped cross-section of the belt.

22. The rotor head according to Claim 21, taken in combination with one of Claims 8 to 10, characterized in that a cover (64) bears, by the intermediary of two lugs (63a, 63b) with which it is provided, a shaft (61) on which one (39) of the units of the damping device is articulated in a pivoting manner about the axis of said shaft.

23. The rotor head according to Claim 21, taken in combination with one of Claims 11 to 16, characterized in that the cover (215) is provided with a hollowing receiving a ball (213) capable of pivoting inside said hollowing about its center which is fixed with respect to the cover (215).

24. The rotor head according to any one of the preceding Claims, characterized in that the damping device (3, 103) associated with a blade is mounted inside the attachment piece (2, 102) of said blade.

25. The rotor head according to any one of the preceding Claims, characterized in that one (39, 139) of the units of the damping device can be a stator unit whose inside walls delimit an envelope (37, 137) having a principal shape of revolution, the other of said units being a rotor unit (38, 138) capable of pivoting coaxially inside said envelope (37, 137).

26. The rotor head according to Claim 25, characterized in that the stator unit (39, 139) is articulated or mounted on the hub, the rotor unit (38, 138) being articulated or mounted on the blade or on its attachment piece (2, 102).

27. The rotor head according to Claim 26, characterized in that the relative pivoting movements of the stator and rotor units (38, 39 ; 138, 139) are hydro-elastically damped, the envelope (37, 137) of the stator unit (39, 139) and the walls of the rotor unit (38, 138) facing said envelope together delimiting, with the extreme faces (57a, 57b ; 22, 222) between which said envelope (37, 137) and said walls are mounted, a main chamber filled with fluid, said envelope (37, 137) and said facing walls being provided with vanes having fins dividing said main chamber into a plurality of volumes, said vanes being associated with laminar flow means (44, 234) of said fluid thru the various volumes of said main chamber, said main chamber being in communication with at least one auxiliary chamber (73) having a variable volume intended in particular to compensate for the expansions of the fluid.

28. The rotor head according to Claim 27, characterized in that the throttling means comprise at least one laminar flow orifice (44, 234) traversing a vane (42, 142) within its thickness, said vane (42, 142) being included between two vanes (41, 141) without orifices associated with that one (39, 139) of the rotor and stator units which does not bear said first vane.

29. The rotor head according to Claim 27, characterized in that a laminar flow orifice (44, 334) is associated with a spring leaf (45, 235) which serves as a clipping valve, closes it in its rest position and allows the passage of the fluid in said orifice above a predetermined differential pressure threshold between the two compartments which said vane delimits in the main chamber.

30. The rotor head according to one of Claims 28 or 29 characterized in that a vane (42) is traversed by two orifices (44) whose axes are substantially distributed over one of its heights.

31. The rotor head according to one of Claims 28 to 30, characterized in that each of the vanes (42, 142) associated with the rotor unit (38, 138) is traversed by at least one laminar flow orifice (44, 234) allowing communication between the two compartments which it delimits in the main chamber.

32. The rotor head according to one of Claims 27 to 31, characterized in that the extreme faces delimiting the main chamber and between which the envelope (37, 137) of the stator unit (39, 139) and the facing walls of the rotor unit (38, 138) are mounted, are the faces of annular rings (57a, 57b ; 221, 222) integral with the walls delimiting said envelope (37, 137), the vanes of the rotor unit (38, 138) moving between said rings (57a, 57b ; 221, 222).

33. The rotor head according to Claim 32, characterized in that the communication between the auxiliary chamber and the main chamber is obtained by circulation of the fluid between the inside annular edge of at least one of said rings (57a, 57b ; 221, 222) and the portion of outer wall of the rotor unit which faces it.

34. The rotor head according to any one of claims 27 to 33, characterized in that an auxiliary chamber (73) is disposed inside the rotor unit (38).

35. The rotor head according to Claim 34, characterized in that the auxiliary chamber (73) is delimited partly by an unrolling membrane (72) mounted on a piston (70) pushed back by a spring (71) in compression in order to adapt the volume of said auxiliary chamber (73) to possible variations in the volumes of fluid and to maintain the hydraulic rotary damper under a sufficient pressure under static load conditions.

36. The rotor head according to Claim 35, characterized in that an unrolling membrane (72) is mounted in a hollowing (47) having a mainly cylindrical shape which is coaxial with the stator and rotor units (38, 39),closed in a fluid-tight manner at one of its ends and in the other end of which said piston (70) is mounted coaxially.

37. The rotor head according to any one of Claims 27 to 36, characterized in that a vane (42) is constituted by two fins (43) side by side, each one traversed by two laminar flow orifices (44), the orifices of the fins (43) of a same vane (42) facing each other, one of the orifices of a fin (43) being associated with a spring leaf (45), and facing an orifice which is not selectively closed by a spring leaf.

38. The rotor head according to Claim 37, characterized in that the vanes (42) of the rotor unit (38) each comprise two fins (43) side by side.

39. The rotor head according to one of Claims 37 or 38 characterized in that the spring leaves (43) associated with a same vane (42) are disposed inside the hollowing delimited by the two fins (43) forming said vane (42), being offset in height with respect to each other.

40. The rotor head according to any one of Claims 32 or 33, characterized in that the auxiliary chamber is delimited at least partially by the outer surfaces of the rings (221, 222) delimiting the extreme faces of the main chamber and at least partially by an elastically deformable membrane (226, 227).

41. The rotor head according to Claim 39, characterized in that each annular ring (221, 222) is associated with an elastically deformable membrane (226, 227), the damping device being provided with an auxiliary chamber towards each of its ends in the height of the stator and rotor units.

42. The rotor head according to one of Claims 40 or 41 characterized in that an elastically deformable membrane (226, 227) has an annular shape.

43. The rotor head according to Claim 42, characterized in that the outside annular edge of an annular elastically deformable membrane (226, 227) is surrounded with an outside ring to which ring said membrane is integrally attached by curing and which is integral in a fluid-tight manner with the stator unit (139).

44. The rotor head according to any one of Claims 25 to 43, characterized in that the rotor unit (38, 138) is mounted between the two arms of a fork (46 ; 206a, 206b) connecting it to the blade or to the attachment piece (2, 102) of said blade.

45. The rotor head according to Claim 44, taken in combination with one of Claims 4 to 8, characterized in that the arms (206a, 206b) of said fork are in one piece with the attachment piece (102).

46. The rotor head according to Claim 44, taken in combination with one of Claims 11 to 16, characterized in that said fork is the connection piece (46).
